# EUROPEAN PATENT APPLICATION

(11) **EP 4 672 081 A1**
(43) Date of publication of application: **31.12.2025**
(21) Application number: 25183669.8
(22) Date of filing: 18.06.2025
(51) Int. Cl.: G06F 40/30, G06F 40/56, G06N 3/0475

(54) **STRUCTURED GENERATION OF LONG-FORM TEXT**

(30) Priority: 28.06.2024 US 202418759607
(71) Applicant: Microsoft Technology Licensing, LLC, Redmond, WA 98052 (US)
(72) Inventor: EDGE, DARREN K, Redmond, 98052 (US); LARSON, JONATHAN KARL, Redmond, 98052 (US); DE SOUZA, DAYENNE CAROLINE, Redmond, 98052 (US)
(74) Representative: CMS Cameron McKenna Nabarro Olswang LLP

(57) **Abstract**

The description relates to computer-assisted generation of long-form text by creating a schema that includes a declarative and machine-readable data format. Based on the schema, processes iteratively generate suggested code to populate a specification that provides the narrative framework for the long-form text. The specification includes structure and substance for inclusion in the long-form text. The interactive nature of the specification development allows a user to progressively update and confirm automatically generated suggestions. In this manner, the specification is updated according to approved code selected from the iteratively generated code. Additional processes serialize the specification to generate multiple unit specifications. A large language model (LLM) is used to generate the long-form text based on the unit specifications.

## Description

### BACKGROUND

Artificial intelligence (Al) has shown tremendous promise in creating some short-form texts, such as reports, memorandums, and electronic mail messages.

### BRIEF DESCRIPTION OF THE DRAWINGS

The Detailed Description is described with reference to the accompanying figures. In the figures, the left-most digit(s) of a reference number identifies the figure in which the reference number first appears. The use of similar reference numbers in different instances in the description and the figures may indicate similar or identical items.
Fig. 1 shows a block diagram of a computing environment configured to generate a long-form narrative text.
Fig. 2 shows an illustrative initial display configured to receive user input in predetermined, structured fields for use in progressively generating a novel or other work.
Fig. 3 shows an illustrative digital display configured to assist the user in progressively building a relatively lengthy narrative text.
Fig. 4 shows another illustrative digital display to assist the user in developing a setup update of a specification of a novel by facilitating the acceptance and execution of suggested code.
Fig. 5 shows an illustrative digital display to assist the user in developing a character update of the specification of a novel by facilitating the generation of characters based on the accepted story setup of Fig. 4
Fig. 6 shows another illustrative digital display to assist the user in developing the character update of the specification of the novel.
Fig. 7 shows another illustrative digital display to assist the user in developing an update to a relationship of the characters of the specification of the novel.
Fig. 8 shows another illustrative digital display to assist the user in further updating the relationships shared between the previously accepted characters.
Fig. 9 shows another illustrative digital display to assist the user in further updating the relationships between previously accepted characters by introducing a new relationship to a new character based on one or more of the previously accepted story setup updates, character updates, and character relationships updates.
Fig. 10 shows an illustrative digital display to assist the user in further updating the characters in the developing specification by suggesting the addition of the character introduced in the character relations update of Fig. 9.
Fig. 11 shows an illustrative digital screen that is displayed to assist the user in updating the acts of a specification by suggesting a three-act structure.
Fig. 12 shows an illustrative digital display to assist the user in updating chapters of the first act that was generated in connection with Fig. 11.
Fig. 13 shows another illustrative digital display to assist the user in updating chapters of the second act that was generated in connection with Fig. 11.
Fig. 14 shows another illustrative digital display to assist the user in updating scenes of the first chapter that was generated in connection with Fig. 12.
Fig. 15 shows another illustrative digital display to assist the user in updating the scenes of the second act of the specification.
Fig. 16 shows another illustrative digital display configured to assist the user in updating all remaining parts of the specification.
Fig. 17 is an illustrative digital display to assist the user in generating an Al developed synopsis according to the specification that has been progressively developed in the preceding figures.
Fig. 18 is another illustrative digital display to assist the user in generating an Al developed synopsis of the substance of the specification.
Fig. 19 is an illustrative digital display to assist the user in accepting or rejecting the synopsis generated in Fig. 18.
Fig. 20 is an illustrative digital display to assist the user in generating an Al authored text according to the specification that has been progressively developed in the preceding figures.
Fig. 21 is an illustrative digital display that includes text that indicates the nature of generated, conversational-style code that corresponds to text to be generated based on the approved specification.
Fig. 22 is an illustrative digital display to assist in generating the Al developed text according to the approved specification.
Fig. 23 is an illustrative digital display to assist the user in evaluating the Al text that was generated according to the specification for continuity.
Fig. 24 is an illustrative digital display to assist the user in evaluating and validating the continuity of the Al text that was generated according to the specification.
Fig. 25 is a digital display to assist the user in evaluating the schema driving the generation of the specification by selecting the view artifacts stage.
Fig. 26 is a digital display to assist the user in evaluating a formatted representation of the specification that has been progressively developed throughout the preceding figures.
Fig. 27 is a digital display to assist the user in evaluating the final text that has been progressively developed using the specification.
Fig. 28 is a continuation of the display of Fig. 27 that includes the remainder of the output, final text.
Fig. 29 is an illustrative digital display to assist the user in developing an Al-generated specification in response to the user prompt directed to the premise of long-narrative text.
Fig. 30 is another illustrative digital display to assist the user in developing the Al-generated specification in response to a further user prompt directed to a protagonist in the setup of Fig. 29.
Fig. 31 is another illustrative digital display to assist the user in developing the Al-generated specification by updating an existing character in response to a new user prompt.
Fig. 32 is another illustrative digital display to assist the user in developing the Al-generated specification by updating an already-specified premise in response to a new user prompt.
Fig. 33 is another illustrative digital display to assist the user in developing the Al-generated specification by updating a relationship between already-specified characters in response to a new user prompt.
Figs. 34A and 34B show a flowchart of an implementation of a device-implemented method of generating a long-form text.
Fig. 35 illustrates an example system that is consistent with some implementations of the present concepts.
Fig. 36 illustrates an example general artificial intelligence model, such as generative language model that can be employed using the disclosed implementations.

### DETAILED DESCRIPTION

### OVERVIEW

The present concepts relate to leveraging Al to generate long form text, such as novels. Artificial intelligence (AI) has shown tremendous promise in creating some short-form texts, such as reports, memorandums, and electronic mail messages. However, larger writing endeavors (e.g., long-form narrative text) introduce continuity challenges that are unique to lengthy narratives. For example, the character and storyline developments between chapters of a novel require coordination and tracking that are unnecessary in shorter works. Other examples of long-form text include short stories, screen plays, travelogs, biographies, memoirs, and documentaries, among others.

The continuity challenges present obstacles for conventional Al text generation techniques. For instance, writing episodes of a program requires a knowledge of how and when to introduce conflict, development, climactic, and plot resolution pivots within an arc of the story. Such plot and character development are impaired by conventional efforts that cannot build upon prior developments. A lack of continuity renders narratives incohesive, disjointed, and confusing, which ultimately makes a storyline hard to follow.

The present concepts provide a technical solution that generates long-form text in a manner that overcomes continuity obstacles impeding conventional Al writings. An example process provides a schema that includes a declarative and machine-readable data format for use in generating the long-form text. Based on the schema, code is iteratively suggested to populate a specification that provides a narrative framework of the long-form text. The specification includes structure and substance for inclusion in the long-form text. The interactive nature of the development allows the user to progressively (e.g., in stages) update and confirm the Al generated suggestions. In this manner, the objects comprising the specification are periodically updated according to selected and approved code suggestions. Additional processes serialize the specification to generate multiple unit specifications. A large language model (LLM) generates the long-form text based on the unit specifications.

In some examples, the system initially presents contextual narratives to the user, rather than an actual script. Thus, the system presents high level text (e.g., reflecting broad ideas) early in the development process. Such high-level text is used to plan the specification and is ultimately excluded from and thus unrecited in the long-form text. The contextual ideas are used to develop finer narrative details, such as a complication for individual scenes of individual acts, as well as characters and their actions.

The system iteratively prompts the user to review suggested output at different stages of a story's progression. The iterative feedback process (e.g., approval, selection, or clarification) steers the drafting of the specification while it is being automatically generated. The generated code also promotes continuity by suggesting at least one of a character, relationship, or plot point based on an update to a previously accepted suggestion.

Put another way, the system interweaves Al-generated suggestions with incremental user feedback to enable iterative development of the plot and character transformations. As such, the system provides an ability to adapt and update generated suggestions to dynamically influence the actual story as it is drafted. The iterative post processing additionally keeps the Al on track regarding the long-form continuity of the framework of the story. In the case of a documentary or historical text, fact checking and validating processes focus on historical events and timelines rather than character and plot transformations.

The specification (e.g., a framework or a backbone) of the Al story drafting process includes a structured, hierarchical approach that includes key elements, such as characters, plotlines, and conflicts. Some examples of the specification thus specify parameters that include important ideas, character arcs, high level acts, and chapter breakdowns. Suggestions generated by Al are mapped according to the parameters of the specification.

In some implementations, the user interacts with a specification agent, which in turn interacts with at least one other agent and a more traditional model. As such, two agents string two different conversations together in a related way. The agents work with the model so that they align with the defined purpose. An agent, or module, includes Al having a memory and being configured to interact with other agents in a loosely defined way to perform a task specific operation. Some examples of an agent include an LLM operating without a framework structure.

The specification agent receives user input, and in response, generates a JavaScript Object Notation (JSON) object that informs a schema on how to draft a novel, email threads, or some other lengthy, narrative text. A JSON object is an open standard file format and data interchange format that uses human-readable text to store and transmit data objects that include attribute-value pairs and arrays (e.g., serializable values). Alternative formats to JSON include YAML Ain't Markup Language (YAML) and Extensible Markup Language (XML), among others.

The specification thus includes the framework of the narrative work, including plot points and character arcs. A specification of nonfiction works can include event dates and received data points corresponding to historical or scientific research, for instance.

A generation agent communicates with the specification agent to generate narrative text and underlying code with the help of the model according to the parameters of the specification. The generation agent of some implementations uses the specification to systematically generate output units. Each output unit is automatically generated with knowledge indicative of the specified structure, including what's been generated and what should be generated next.

The generation agent will generate the next sentence or chapter in a way that blends, has continuity, and is informed by developments occurring in prior and future generated code and text. The specification and generation agents continue to receive input from the user and communicate code to the model until the narrative text is complete.

As described herein, the JSON object is a human-readable in a machine-interpretable format. Code that executes updates to JSON objects and inherits this human-readable quality while enabling incremental execution. As such, JSON facilitates the progressive development of the specification. This progress development makes human input and feedback possible. The JSON object further acts as a go-between for the user and the LLM. In this manner, the interpretation of both domains is consistent. This feature allows the user to incrementally or otherwise iteratively approve code generated by the model by reviewing conversational text in stages. The conversational text corresponds to the code and can be followed by the user. The user thus steers and confirms the accuracy of generated text in increments, rather than having to review the final output text of the entire work before going back to make changes to the code corresponding to an entire, lengthy work. The iterative review makes the final text more likely to be correct.

As described herein, a serialization mechanism is used to generate the narrative according to the structure (e.g., specification) that aligns, for instance, major complications with acts of the novel. Continuing with the example, moderate complications are aligned with each chapter, and minor complications are aligned for each scene.

When generating and outputting character development, the system is designed to facilitate the progression of relationships over time. Such relationship transformations can be irreversible in the novel. When generating units of output, the system merges different aspects of the specification to create setups comprising opportunities for character development. A character or relationship has initial inputs that include start and end states. The example system uses these inputs to determine at what points in the storyline the transformations should occur. In one implementation, knowing the length of the novel and knowing the desired progression of the transformation provides a structure of the development. As such, the system generates cues in the storyline for suggesting setups and merging aspects of the specification to structure the transformation.

Some implementations automatically determine when and how plot and character developmental cues should be coordinated into an arc of the story. For instance, the system uses an estimated length of the text as one input for determining when to introduce text that demonstrates a plot twist or transition. In the example, the system knows the beginning and ending state of the story arc. As such, the system uses this knowledge to selectively and strategically position transitional plot points within each scene and chapter based on the trajectory of the story arc. The plot points are timed cohesively with the desired timing of character development by using character transitions as inputs.

In some examples, the LLM generates code updates to a JSON object. Code (e.g., Python code) is generated and executed to update the JSON object. Using this configuration, the LLM generates the code only once. The code is understandable to end-users who are not necessarily developers by virtue of being displayed in a conversational style. For instance, the digestible, readable nature of the conversational-style code allows the user to incrementally follow the content during the construction of the specification. The user can independently parse the code to ensure that the code functions as intended. By tasking the LLM to generate code updates in a particular way, it is also possible to run automated checks that ensure the safety of the code to be executed.

In some examples, the system uses an estimated length of the text as an input for determining when to introduce text that demonstrates a transition in the thoughts or behavior of a character(s). In this example, the system knows the plot points occurring in each chapter, as well as the beginning and ending state of the development of a character. Some implementations coordinate character transition(s) based on the known plot points that could influence the character.

In one specific scenario, the user tasks the system to generate an extensive, narrative text. In response, the system suggests one or more frameworks, or specifications, representing a summary of a plot. The specification includes major plot points and characters. The user is prompted to review and select their favorite storyline. The user is additionally prompted to interactively provide feedback, or tweaks, to the output specification. The feedback is used by the system to generate an updated storyline of the specification that is reflective of the user input. As such, the plot points of the specification are based on current and previously accepted suggestions.

As described herein, the system also suggests several characters to be included in the story of the specification. The system further suggests an initial state and a final state relating to the character arc within the story for a suggested character. As before, the user is prompted to select one or more of the suggested characters and to interactively provide feedback, or tweaks, to update the specification. In some examples, the user accepts or rejects a whole update, which may contain desirable and undesirable elements. The user then refers to these elements in their conversational input to steer the next suggested update.

The generated, selected, and incrementally reviewed storylines and character arcs of the specification are used by the system to fill in the narrative text in between major plot points. More specifically, details that conform and align with the specification are suggested for review. Put another way, the specification provides ingredients and structure that are used to map, or plug in, the story and characters to the scenes or chapters.

As a benefit of having the specification be distinct from the text, the storyline and characters of the specification can be generalizable and saved for a different application. As such, new user input can be processed in conjunction with a previously saved specification to create a new specification. In some examples, aspects of a specification originally developed for a novel are used as inputs to a new specification for a movie or another novel. In some examples, a specification relating to a superhero universe of characters and planets of a first project can be imported into the model for use in a new story with new characters. The new narrative text is integrated and augmented with new plot points and characters with some or all the original specification.

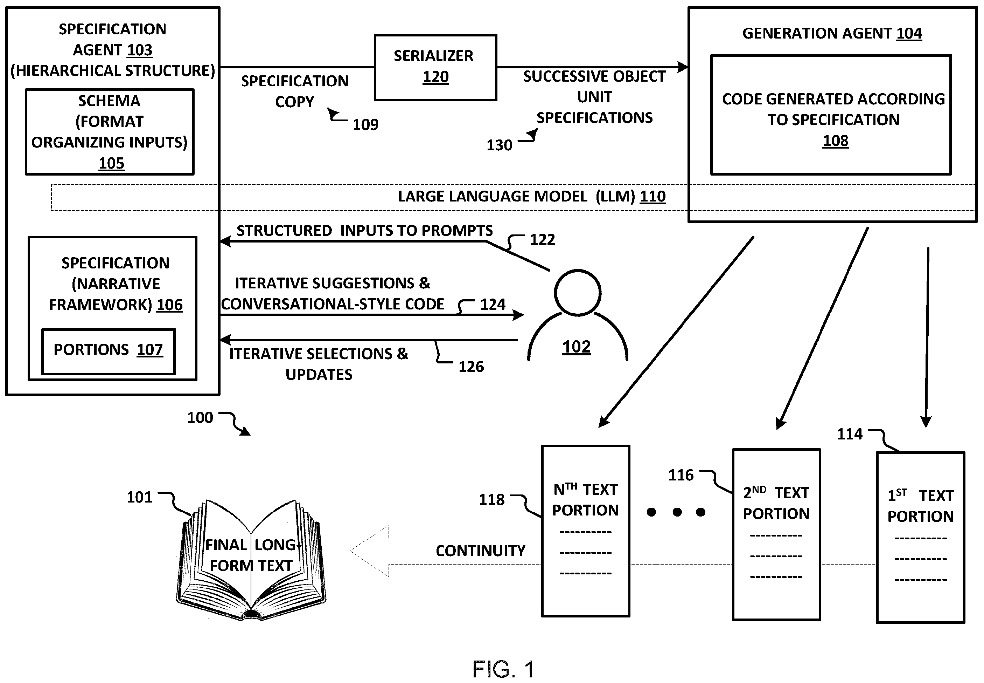

Turning more particularly to the drawings, Fig. 1 shows a block diagram of a long-form text generating system 100 configured to generate a long-form text 101. The user 102 interacts with a specification agent 103 of the system 100, which communicates with a generation agent 104 to generate the long-form text 101. As explained herein, the user 102 accesses a display screen and input device (e.g. keyboard or microphone) to interact with the specification and generation agents 103, 104.

The final long-form text 101 is composed of text portions 114, 116, and 118 that are approved at intervals for combination within the final long-form text 101. The text portions 114, 116, and 118 in the example include a continuity of storylines and characters.

The specification agent 103 provides a structure for the generation of the long-form text 101. The structure is used as a basis for generating the structure and substance of the long-form text 101. For instance, the structure and substance of some examples include the story and character arcs. To this end, the specification agent 103 includes a schema 105 and a specification 106. The specification 106 includes the narrative framework of the long-form text 101.

The schema 105 includes a format for organizing data and other inputs used to generate the specification 106. More particularly, the schema 105 includes a declarative and machine-readable data format to be used to generate the long-form text 101. As described herein, the system 100 iteratively suggests code based on the schema 105 to populate the portions 107 of the specification 106 that provides the narrative framework of the long-form text 101.

To generate the specification 106, the specification agent 103 receives inputs 122 from the user 102. The inputs 122 include unstructured text cues. More particularly, the specification agent 103 generates narrative suggestions and conversational-style code 124 in response to the inputs 122 and for review by the user 102. In some examples, the conversational-style code 124 corresponds to Al-generated suggestions of plot summaries and intertwined character relationships.

The code 108 and underlying text suggestions are continuously or iteratively generated according to the schema 105 and the specification 106. As described herein, the code 124 is communicated to the display of the user 102 in conversational-style code. The conversational nature of the code 124 allows a non-programmer type of user to follow in human language text what the specification agent 103 is suggesting.

The iterative feedback and conversational-style code 124 of some implementations is initially relatively high level (e.g., regarding broad generalities of a story). The suggestions become more detailed as the storyline and characters develop during the structure process. The suggestions, once approved and validated, are used to output actual text portions 114, 116, and 118. The iterative suggestions and conversational-style code 124 and review processes (e.g., selection and feedback) 126 occur in portions that correspond to acts, chapters, and scenes. The suggestions and code 124 of some examples are iteratively presented to the user 102. Thus, the suggestions and code 124 output to the user 102 earlier in a drafting process are of a more general nature than later suggestions and code 124, as details (e.g., subplots, specific character interactions) of the story are developed.

In some instances, the suggestions and code 124 include multiple suggestions from which the user 102 selects. For instance, the user 102 could select a suggestion stipulating that the plot should center around a sailboat expedition, instead of a suggestion that the characters are on a spaceship. The user 102 alternatively or additionally provides feedback that requests an update. The update causes the specification agent 103 to generate one or more new suggestions and code 124. For example, the user 102 selects the sailboat suggestion, but also provides feedback indicating that at least a third of the story should take place on a remote island. Such an update is provided back to the specification agent 103. The request initiates the generation of updated suggestions that account for all of the user input prompts for selection and inclusion within the specification 106.

The specification agent 103 and the serializer 120, or sequencer, use a copy 109 of the specification 106 to output a sequence of unit specifications 130. Each unit specification 130 is ultimately used to guide a generative model , such as an LLM 110 to generate a unit of output that is conditioned on one or more previously generated unit specifications, which are also provided as inputs.

The serializer 120 converts the overall specification into the series of unit specifications 130. The unit specifications 130 are output to the generation agent 104. The generation agent 104 utilizes the last N outputs, the overall specification (or a subset), and the specification to generate the next output text. The generation agent 104 uses these received inputs to generate a unit of output text (e.g., not code).

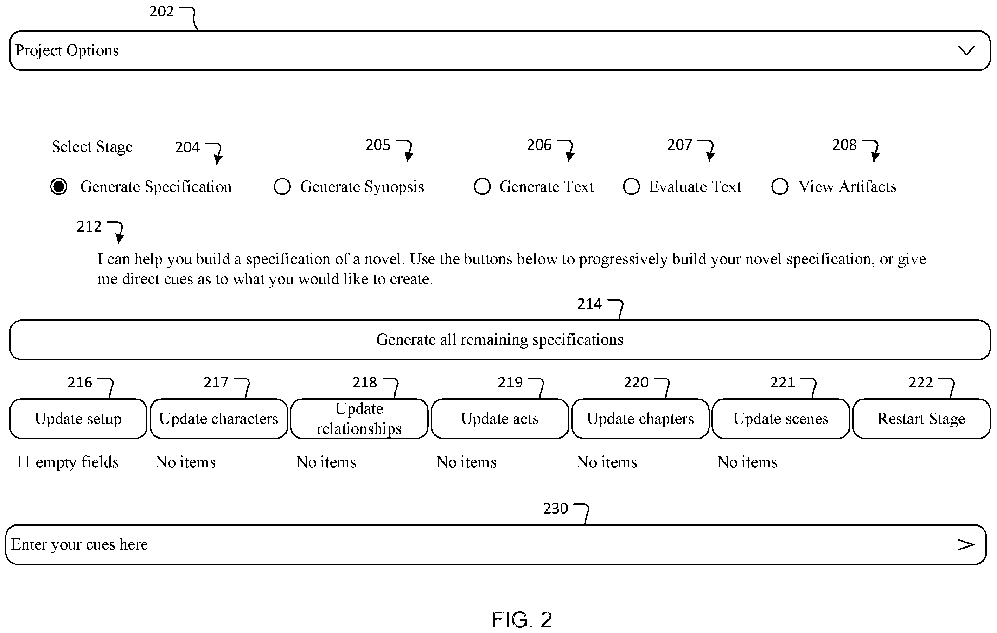

Fig. 2 shows an illustrative digital screen of an initial display (e.g., user interface or UI) configured to receive user input in predetermined fields for use in progressively generating a novel or other work. More specifically, the display screen is designed to prompt and receive input to initially generate a specification, such as the specification 106 of Fig. 1. The display is presented on a screen, such as on the computer monitor of the user 102 of Fig. 1. A project type of the long-narrative text is selected from the pulldown option 202. For instance, the user can designate a novel, a documentary, movie script, or biography, among other long-form narrative texts described herein.

The user is presented with buttons 204-208 corresponding to stages indicative of the different components and development of the long-narrative text. Stated another way, the stages correspond to progressive phases and elements of the drafting operation. The stages are selected to focus work on a particular aspect of the text development.

In the case of the display of Fig. 2, button 204 corresponding to the generating specification stage is automatically selected at the beginning of a text generation process. Accordingly, the system (e.g., the specification agent 103 of Fig. 1) displays popup text instructing the user on how to progressively build the specification.

As described herein, selection of the generate synopsis stage (i.e., button 205) corresponds to a phase where the user is presented with a summary of the narrative project. The generate text stage button 206 corresponds to a phase where the Al displays text of the story.

The text is reviewed when the evaluate text button 207 is selected. The button 208 associated with the view artifacts stage corresponds to a stored, reusable diagrammatic, structured framework or plan. For instance selecting artifacts includes generalizable components that align with the specification and facilitate data mapping to the different parts of the specification. Illustrative artifacts include: the schema, the specification, the synopsis, the sequence, the texts, the full JSON data, and/or the final text. As with other modules described herein, artifacts can be saved and reused later by different Al applications.

A displayed prompt 212 informs on different approaches available for helping the user develop a specification. More particularly, the system displays and explains how to use buttons 216-222 for progressively building the specification and a field 230 for directly entering cues at any time during the process. The buttons 216-222 displayed for selection by the user enable the specification agent to develop the specification according to preconfigured parts and elements useful in generating the specification.

More particularly, the user is presented with an update setup button 216, an update characters button 217, an update relationship button 218, an update acts button 219, an update chapters button 220, an update scenes button 221, and a restart stage button 222. On this display, text positioned under each of buttons 216-221 indicate that the fields of each are initially empty. The respective functionalities of each of the buttons 216-222 is described herein in the context of an ongoing example. Alternatively or additionally, the user can enter cues, or prompts, in the field 230 to affect a newly generated suggestion. A generate all remaining specifications button 214 can be chosen to have the Al populate all remaining fields of each of the respective specification components designated by each of buttons 216-221.

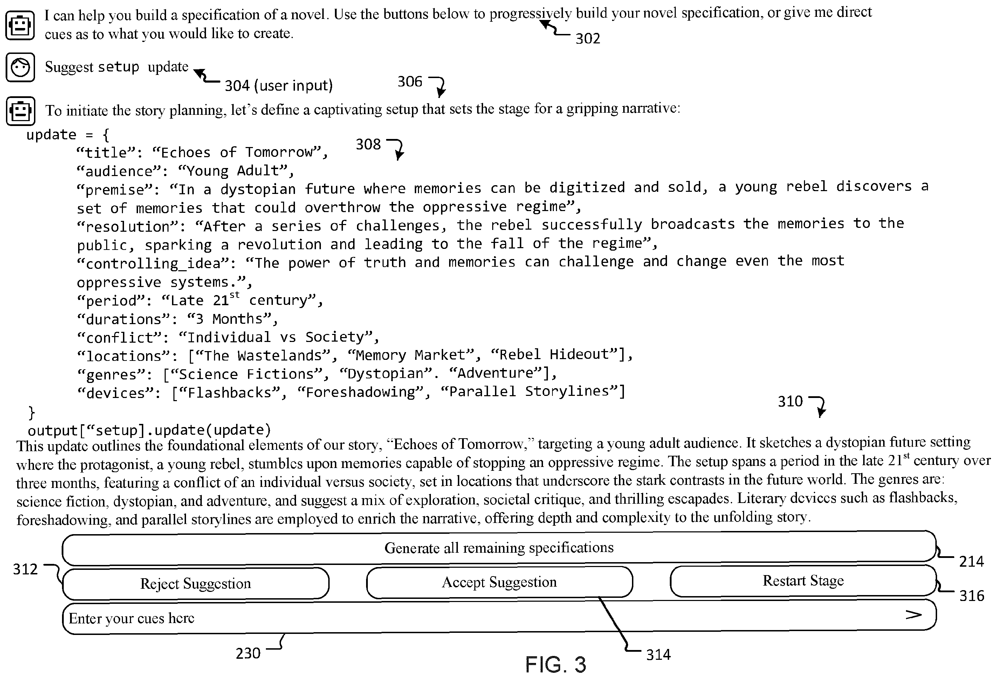

Fig. 3 shows an illustrative digital display configured to assist the user in progressively building a lengthy narrative text. More particularly, the display is presented in a scenario where the user selects the update setup button 216 shown in Fig. 2 to facilitate drafting a novel. As described herein, the selection of the setup button 216 initiates the generation and suggestion of at least one, random story setup.

Turning more particularly to Fig. 3, the display includes a message 302 presented by the system to prompt user input. The user input 304 is received throughout the progressive process in a format that is tailored to generating specifications. For example, the user input 304 corresponds to the user selecting the update setup button 216 of Fig. 2. The user input 304 initiates the automatic generation of a setup for the specification. As shown in the display, a displayed message 306 reads that a suggested setup will be generated to set the stage for the novel.

The system (e.g., the specification agent) generates and displays conversational-style code 308, as well as corresponding text 310 for review by the user. The conversational-style code 308 enables the user to follow the main elements of the setup despite being programming code that can be processed to generate the specification.

After reviewing the code 308 and text 310, the user is prompted to select one of a reject suggestion button 312, an accept suggestion button 314, or a restart the stage button 316. Rejecting the selection causes the system to discard the code 308 and text 310 and generate another scenario. Accepting the suggestion causes the system to further develop other aspects of the specification based on the accepted setup. Thus, suggested code may be automatically generated in response to rejection of a previous suggestion. The restart stage button 316 takes the user back to the initial display of Fig. 2 to restart the current stage (e.g., the setup stage). As in Fig. 2, the user interfacing with the display of Fig. 3 can select button 214 to generate all remaining specifications or can enter cues of their own into field 230 to initiate the generation of a new, updated suggestion.

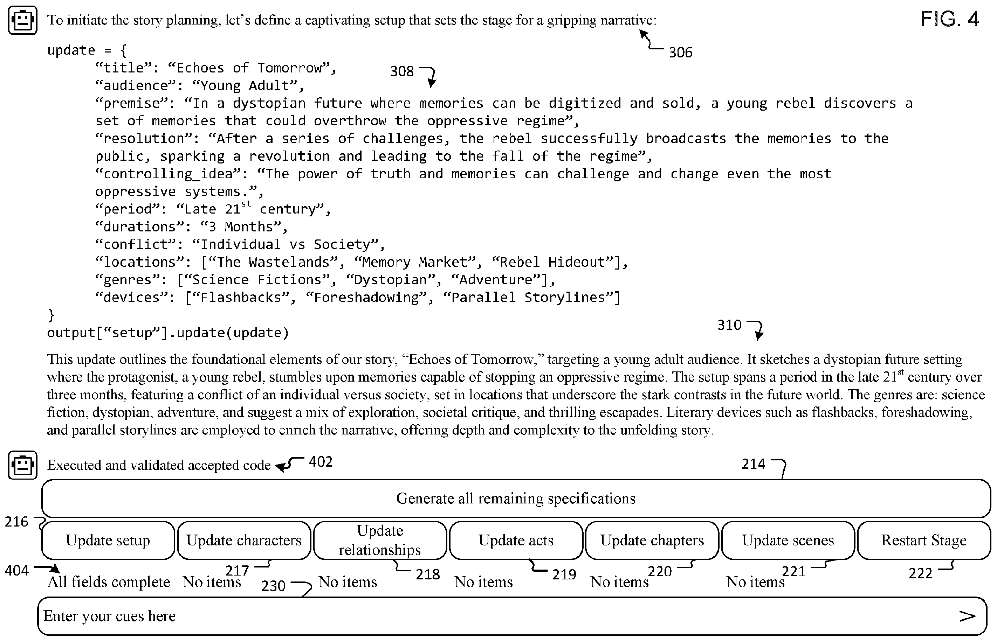

Fig. 4 shows another illustrative digital display to assist the user in developing a setup update of a specification of a novel by facilitating the acceptance and execution of the suggested code. More particularly, the display is presented in a scenario where the user has selected the accept suggestion button 314 of Fig. 3. As shown in the display, the message 306 announcing the suggested setup continues to be presented.

The system displays the conversational-style code 308 and corresponding text 310 of the previous display for reference by the user. A message 402 reads that the code selected by the user in the description of Fig. 3 has been executed and validated. The validation process checks the safety of the code and then executes the code with the goal of checking the validity of the resulting specification object with respect to the schema. The system again displays buttons 216-222 for progressively building the specification. As described herein, buttons 216-222 displayed for selection by the user enable the Al to develop the specification according to preconfigured parts and elements useful in generating the specification.

The current display includes text 404 indicating that all fields of the updated setup part of the specification are complete. At this point, the fields of other parts of the specification are empty (e.g., no items), as indicated by text positioned under each corresponding button 217-221. The user may elect to enter cues in the field 230. The field 230 directly informs the Al as to what ideas the user wants included in a generated specification. The user continues to be presented with button 214 to generate all remaining specifications or to type in cues of their own into the field 230 to affect the generation of a new, updated suggestion.

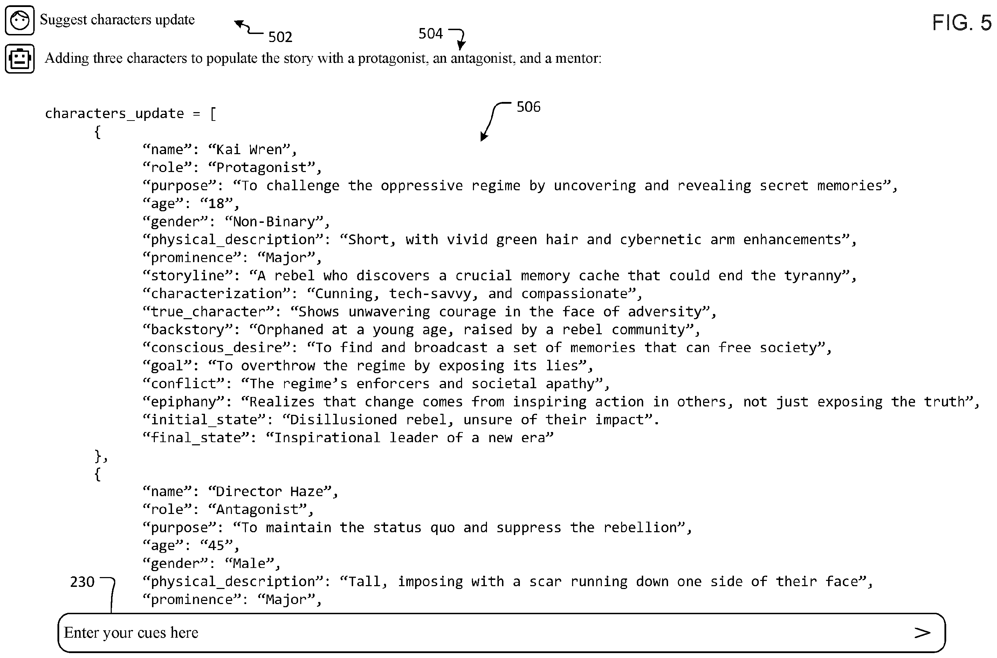

Fig. 5 shows an illustrative digital display to assist the user in developing a character update of the specification of a novel by facilitating the generation of characters based on the accepted story setup. As described herein, the aspects of the character generation are based on one or more of any previously accepted story setup updates, character updates, and character relationships updates. More particularly, the screen is displayed in a scenario where the user has selected the update characters button 217 of Fig. 4.

In response to the selection, the system displays text 502 confirming receipt of user input requesting the character update. In response to the selection, the system additionally displays a generated suggestion 504. For instance, the generated suggestion 504 indicates that a protagonist, an antagonist, and a mentor could be used to populate the story. The system further generates and displays conversational-style code 506. The conversational nature of the code 506 enables the user to follow the main elements of the proposed characters despite being programming code that can be processed to generate the specification. The field 230 is displayed for the user to enter cues to be alternatively or additionally used in the generation of the character update to initiate the generation of a new, updated suggestion.

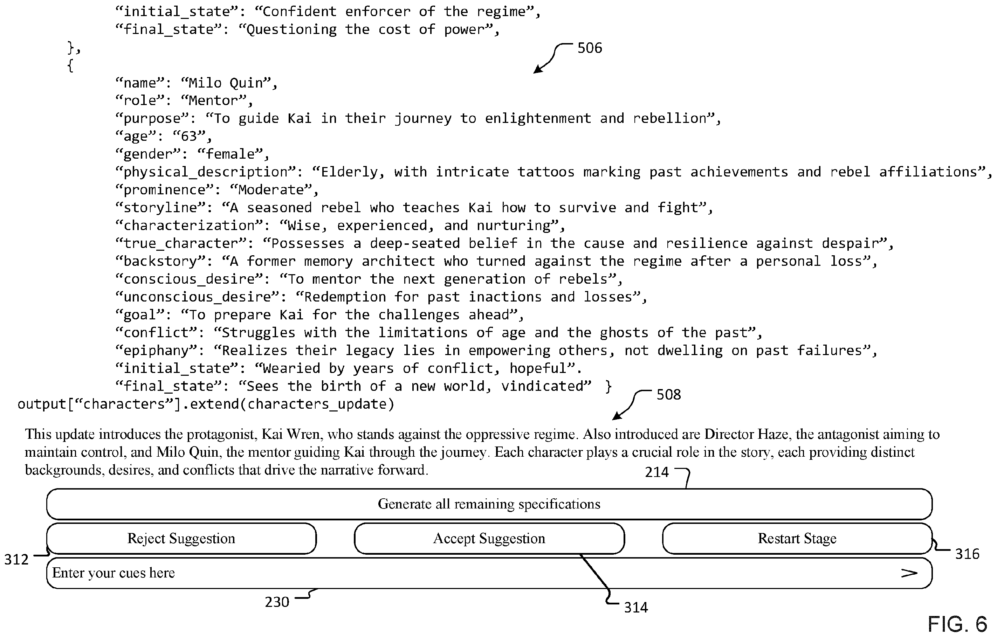

Fig. 6 shows another illustrative digital screen that is displayed to assist the user in developing the character update of the specification of the novel. The display sequentially follows the code generation shown in Fig. 5, where the user has selected the update characters button 217 of Fig. 4. More particularly, the display includes the suggested conversational-style code 506 of the previous display, as well as corresponding text 508 for reference by the user.

After reviewing the code 506 and text 508, the user is again presented with buttons 312, 314, and 316. More particularly, the user selects one of the reject suggestion button 312, the accept suggestion button 314, or the restart the stage button 316. Rejecting the selection causes the system to discard the code 506 and text 508 and generate another character update. Accepting the suggestion causes the system to further develop other aspects of the specification based on the accepted update. The restart stage button 316 directs the user back to the display of Fig. 4, initially suggesting a new character update. As in Fig. 2, the user interfacing with the display of Fig. 6 can select button 214 to generate all remaining specifications or can enter cues of their own into field 230 to affect the generation of a new, updated suggestion.

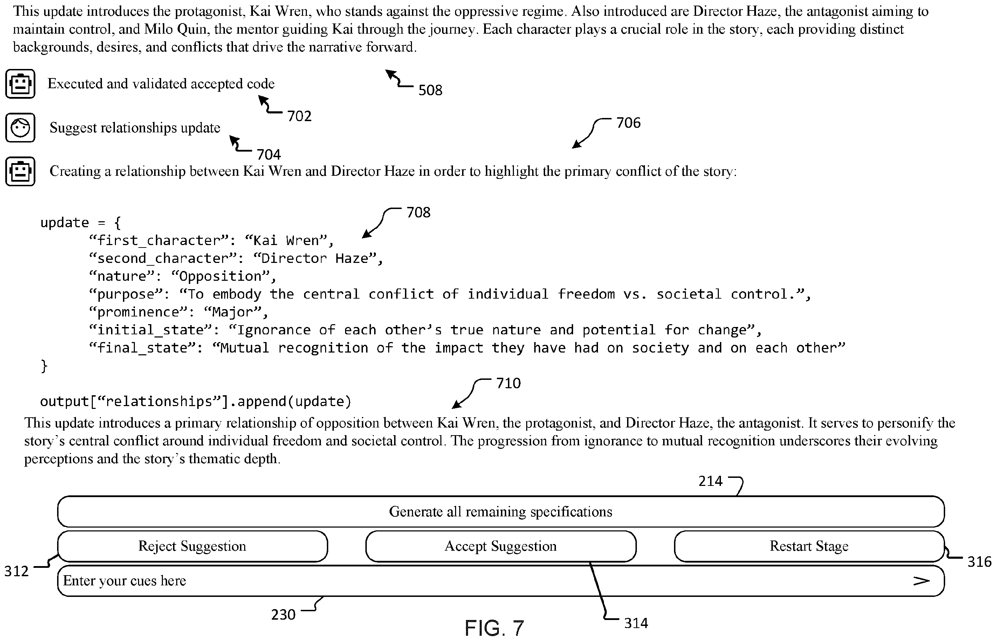

Fig. 7 shows another illustrative digital display that is displayed to assist the user in developing an update to a relationship of the characters of the specification of the novel. More particularly, the display is a continuation of Fig. 6, where the user has been presented with an Al-generated suggestion to update the characters. As described herein, the aspects of the new relationships are based on one or more of the previously accepted story setup updates, and character updates. As such, the display includes the text 508 of the previous screen summarizing the addition of characters to be included in the specification.

The display of Fig. 7 includes text 702 reflecting that the user has accepted the suggested code 506 of Fig 6 (e.g., by selecting accept suggestion button 314). More particularly, the text 702 confirms that the code 506 has been accepted and validated. As described herein, validation processes include automatically checking for continuity between the actors and storylines of the text.

A message 704 indicates that the user has selected the update relationships button 218 of Fig. 2. In one implementation, the user has been automatically presented with the command prompt (e.g., button 218 of the display of Fig. 2) upon completion of the character update portion of Fig. 6. In an alternative configuration, the specification agent automatically generates the next update without the user having to suggest one. In response to the user input reflected in the message 704, the specification agent generates a suggested update regarding the accepted characters. For example, the system displays conversational-style code 708, as well as text 710 that includes a human language summary of the code. A text message 706 explains the goal of the proposed suggestions.

After reviewing the code 708 and text 710, the user is prompted to select one of reject suggestion button 312, accept suggestion button 314, or restart the stage button 316. Rejecting the selection causes the system to discard the code 708 and text 710 and generate another scenario. Accepting the suggestion causes the system to further develop other aspects of the specification based on the accepted character relationship update. The restart stage button 316 directs the user back to the initial display of Fig. 2 to restart the current stage (e.g., the update character relationships stage). As in Fig. 2, the user interfacing with the display of Fig. 7 can select button 214 to generate all remaining specifications or can type in cues of their own into field 230 to initiate the generation of a new, updated suggestion.

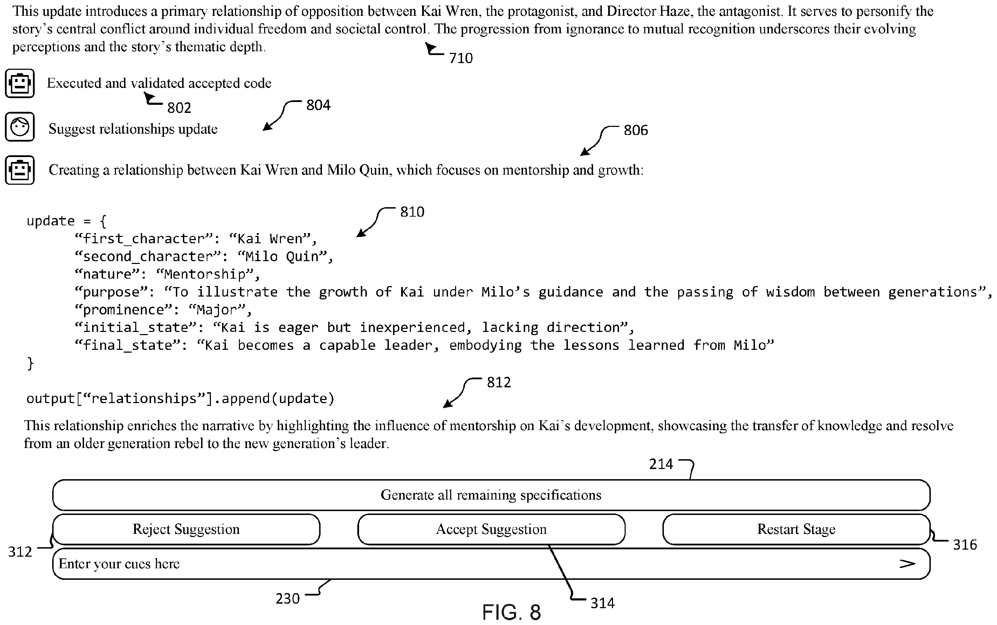

Fig. 8 shows another illustrative digital display to assist the user in further updating the relationships shared between the previously accepted characters. As described herein, the aspects of the updated relationship are based on one or more of the previously accepted story setup updates, character updates, and character relationships updates. More particularly, the display is a continuation of Fig. 7, where the user has been presented with an Al-generated suggestion of the second character relationship. As such, the display includes the text 710 of the previous screen summarizing the relationship between characters to be included in the specification.

The display of Fig. 8 includes text 802 indicating that the user has accepted the suggested code 708 of Fig 7 (e.g., by selecting accept suggestion button 314). More particularly, the text 802 confirms that the code 708 has been accepted and validated.

A message 804 indicates that the user has selected the update relationships button 218 of Fig. 2. In one implementation, the user has been automatically steered to the command prompt (e.g., button 218 of the display of Fig. 2) upon completion of the prior character relationship update portion of Fig. 7. In an alternative configuration, the specification agent automatically generates a next update without the user having to suggest one.

In response to the user input reflected in the message 804, the system (e.g., the specification agent) generates a further suggestion for the relationship between the accepted characters. More particularly, the system displays conversational-style code 810, as well as text 812 including a human language summary of the code. A text message 806 explains the goal of the proposed suggestions.

After reviewing the code 810 and text 812, the user is prompted to select one of reject suggestion button 312, accept suggestion button 314, or restart the stage button 316. Rejecting the selection causes the system to discard the code 810 and text 812 and generate another scenario. Accepting the suggestion causes the system to further develop other aspects of the specification based on the accepted character relationship update. The restart stage button 316 takes the user back to the initial display of Fig. 2 to restart the current stage (e.g., the update character relationships stage). As in Fig. 2, the user interfacing with the display of Fig. 8 can select button 214 to generate all remaining specifications or can enter cues of their own into field 230 to affect the generation of a new, updated suggestion.

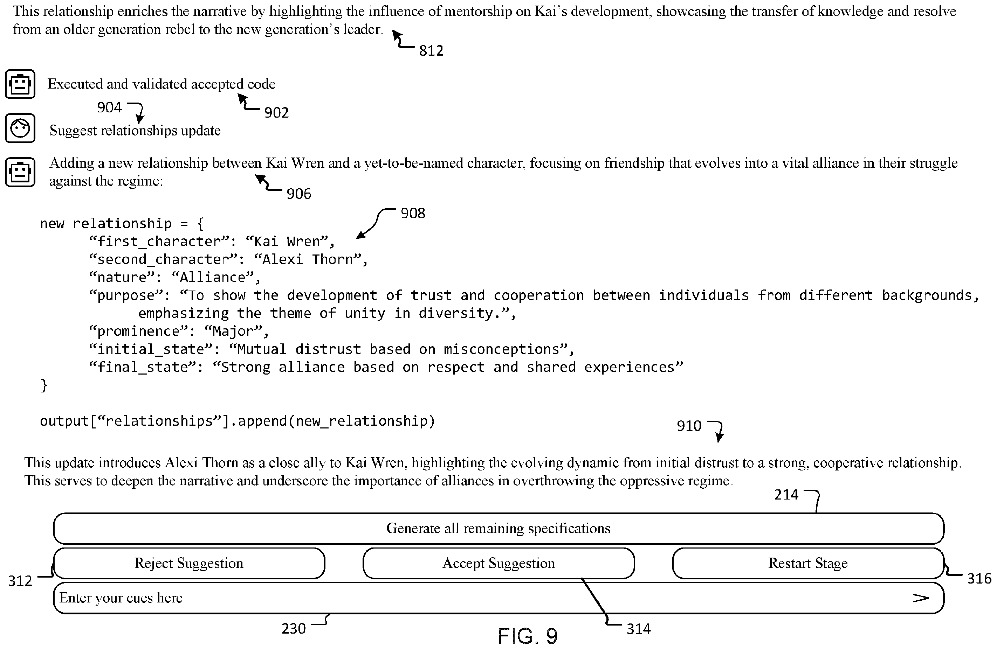

Fig. 9 shows another illustrative digital display to assist the user in further updating the relationships between previously accepted characters by introducing a new relationship to a new character based on one or more of the previously accepted story setup updates, character updates, and character relationships updates. The display sequentially follows the code generation shown in Fig. 8, where the user has been presented with an Al-generated suggestion. As such, the display includes the text 812 of the previous screen summarizing the relationship between characters to be included in the specification.

The display of Fig. 9 includes text 902 indicating that the user has accepted the suggested code 810 of Fig 8 (e.g., by selecting accept suggestion button 314 of Fig. 8). More particularly, the text 902 confirms that the code 708 has been accepted and validated. As described herein, validation processes include automatically checking for continuity between the actors and storylines of the text. A message 904 indicates that the user has selected the update relationships button 218 of Fig. 2. In one implementation, the user has been automatically presented with the command prompt (e.g., button 218 of the display of Fig. 2) upon completion of the prior character relationship update portion of Fig. 8. In an alternative configuration, the specification agent automatically generates a next update without the user having to suggest one.

In response to the user input reflected in the message 904, the system (e.g., the specification agent) generates a new, related suggestion for the relationship between the characters. For instance, the new relationship introduces a relationship with a new character. As such, the system displays conversational-style code 908, as well as text 910 that includes a human language summary of the code. Text message 906 explains the goal of the proposed suggestions.

After reviewing the code 908 and text 910, the user is prompted to select one of the reject suggestion button 312, the accept suggestion button 314, or the restart the stage button 316. Rejecting the selection causes the system to discard the code 908 and text 910 and generate another scenario. Accepting the suggestion causes the system to further develop other aspects of the specification based on the accepted character relationship update. The restart stage button 316 directs the user back to the initial display of Fig. 2 to restart the current stage (e.g., the update character relationships stage). As in Fig. 2, the user interfacing with the display of Fig. 9 can select the button 214 to generate all remaining specifications or the user can type in cues of their own into field 230 to affect the generation of a new, updated suggestion.

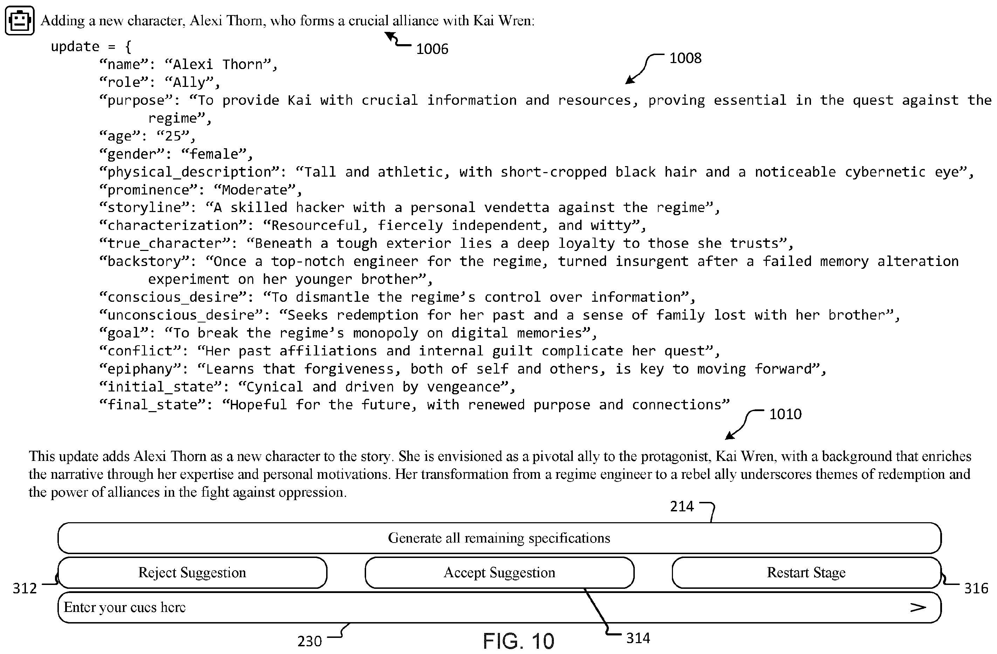

Fig. 10 shows an illustrative display to assist the user in further updating the characters in the developing specification by suggesting the addition of the character introduced in the character relations update of Fig. 9. As with other aspects of the specification, the aspects of the new character are based on one or more of the previously accepted story setup updates, character updates, and character relationships updates. More particularly, the display is a continuation of Fig. 9, where the user has been presented with an Al-generated suggestion to introduce a new relationship and character. The display of Fig. 10 includes text 1006 indicating that the specification agent has added the character based on the previously suggested character relationship. In one implementation, the user requests the code 1008 for the new character (e.g., using button 217 of the display of Fig. 2). In an alternative configuration, the specification agent automatically generates this update without the user having to suggest one. Conversational-style text 1010 in human language explains and corresponds to the generated code 1008.

After reviewing the code 1008 and text 1010, the user is prompted to select one of reject suggestion button 312, accept suggestion button 314, or restart the stage button 316. Rejecting the selection causes the system to discard the code 1008 and text 1010 and generate another scenario. Accepting the suggestion causes the system to further develop other aspects of the specification based on the accepted character update. The restart stage button 316 takes the user back to the initial display of Fig. 2 to restart the current stage (e.g., the update character). As in Fig. 2, the user interfacing with the display of Fig. 10 can select button 214 to generate all remaining specifications or can enter cues of their own into field 230 to affect the generation of a new, updated suggestion.

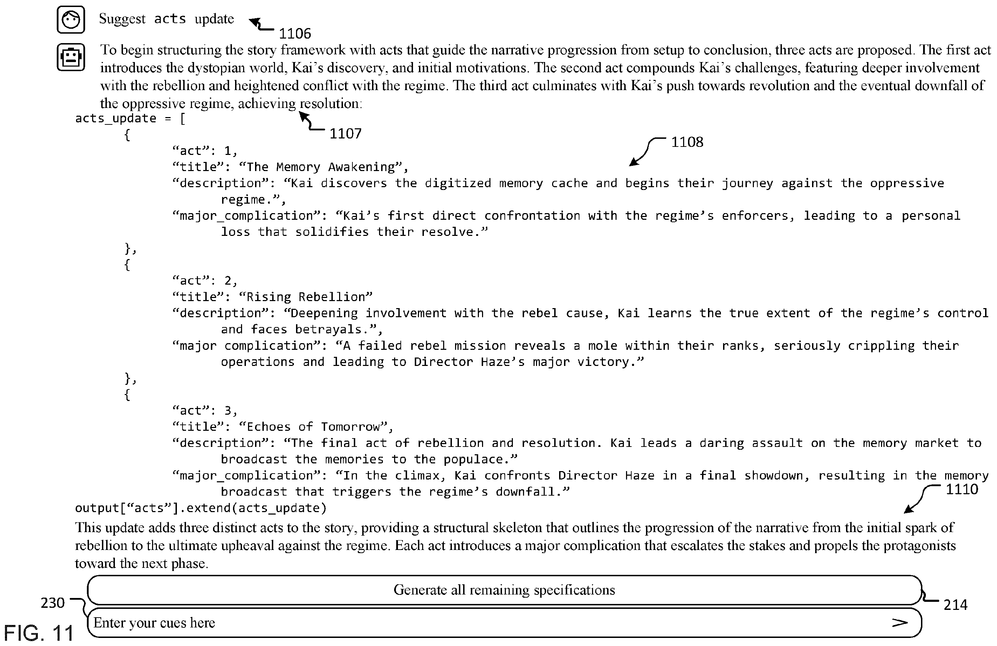

Fig. 11 shows an illustrative digital display to assist the user in updating the acts of a specification by suggesting a three-act structure. As with other parts of the specification, generation of the acts are based on one or more of the previously accepted story setup updates, character updates, and character relationships updates. In one implementation, the display of Fig. 11 sequentially follows the code generation shown in Fig. 10.

The display of Fig. 11 includes text 1106 indicating that the user has requested code 1108 for the acts (e.g., using button 219 of the display of Fig. 2). In an alternative configuration, the specification agent automatically generates the update without the user selection. A message 1107 displayed to the user lays out a suggested outline for acts to be included in the specification. Text 1110 in human language corresponds to the generated code 1108. After reviewing the code 1108 and text 1110, the user can select button 214 to generate all remaining specifications or can enter cues of their own into field 230 to affect a newly generated suggestion.

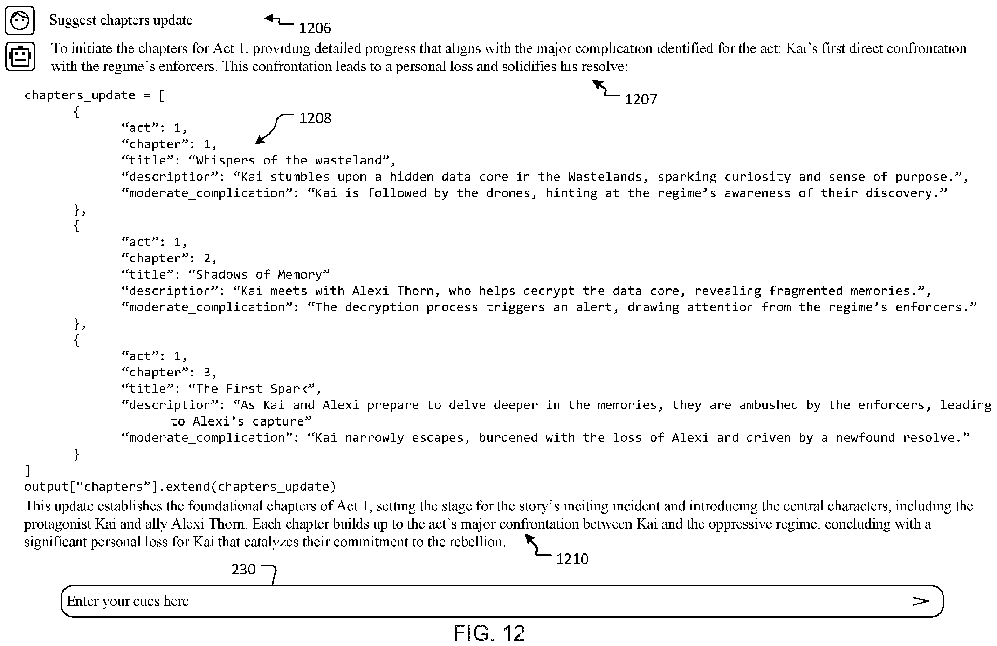

Fig. 12 shows an illustrative digital display to assist the user in updating chapters of the first act that was generated in connection with Fig. 11. As with other parts of the specification, generation of the chapters are based on one or more of the previously accepted story setup updates, character updates, character relationships updates, and act updates. In one implementation, the display of Fig. 12 sequentially follows the code generation shown in Fig. 11.

The display of Fig. 12 includes text 1206 indicating that the user has requested code 1208 for the chapters (e.g., using button 220 of the display of Fig. 2). In an alternative configuration, the specification agent automatically generates the update without the user having to select it. A message 1207 displayed to the user lays out a suggested outline for chapters to be included in the first act. Text 1210 in human language corresponds to the generated code 1208. After reviewing the code 1208 and text 1210, the user can type in cues to direct changes into field 230 to affect the generation of a new, updated suggestion.

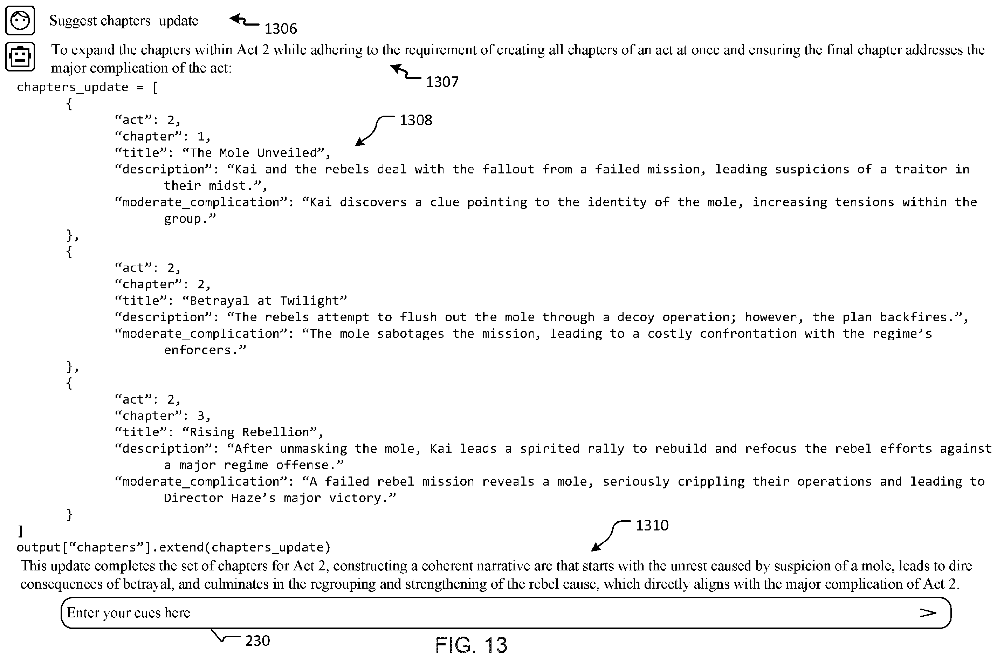

Fig. 13 shows another illustrative digital display to assist the user in updating chapters of the second act that was generated in connection with Fig. 11. As with other parts of the specification, generation of the chapters are based on one or more of the previously accepted story setup updates, character updates, character relationships updates, act updates, and other chapter updates. In one implementation, the display of Fig. 13 sequentially follows the code generation shown in Fig. 12. The display of Fig. 13 includes text 1306 indicating that the user has requested code 1308 for the chapters (e.g., using button 220 of the display of Fig. 2).

In an alternative configuration, the specification agent automatically generates the update without the user having to select it. A message 1307 displayed to the user lays out a suggested outline for chapters to be included in the first act. Text 1310 in human language corresponds to the generated code 1308. After reviewing the code 1308 and text 1310, the user can enter cues to direct changes into field 230 to affect the generation of a new, updated suggestion.

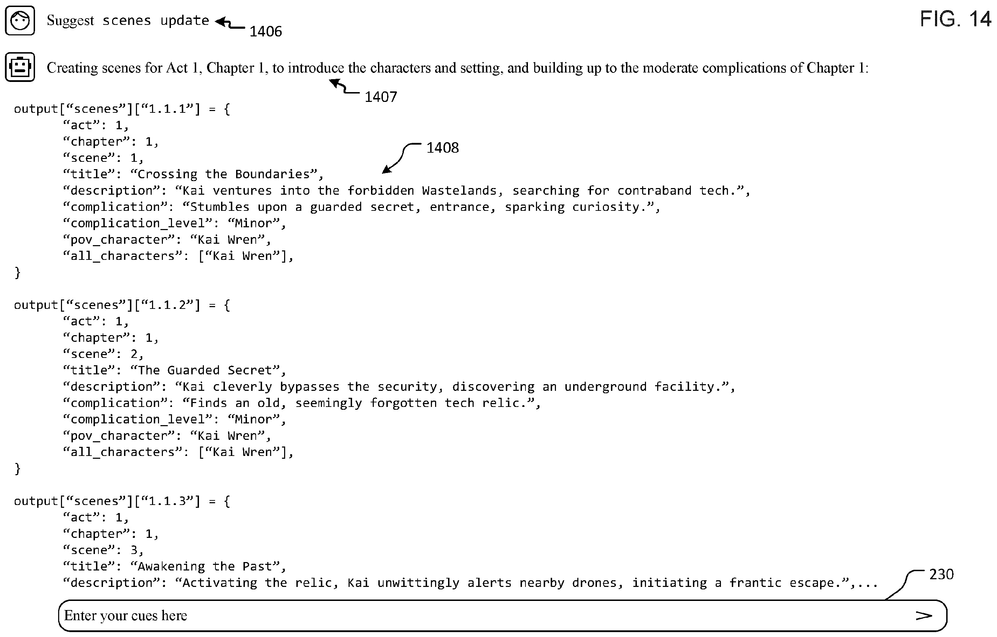

Fig. 14 shows another illustrative digital display to assist the user in updating scenes of the first chapter that was generated in connection with Fig. 12. As with other parts of the specification, generation of the scenes are based on one or more of the previously accepted story setup updates, character updates, character relationship updates, act updates, and/or chapter updates. In one implementation, the display of Fig. 14 sequentially follows the code generation shown in Fig. 13. The display of Fig. 14 includes text 1406 indicating that the user has requested code 1408 for the scenes (e.g., using button 221 of the display of Fig. 2). In an alternative configuration, the specification agent automatically generates the update without the user having to select it. A message 1407 displayed to the user lays out a suggested outline for chapters to be included in the first act.

After reviewing the code 1408 and corresponding text (not shown), the user can type in cues to direct changes into field 230 to affect the generation of a new, updated suggestion. In some examples, the user requests via field 230 that the system suggest three scenes for chapter two in act one, as well as to update and iterate the specification.

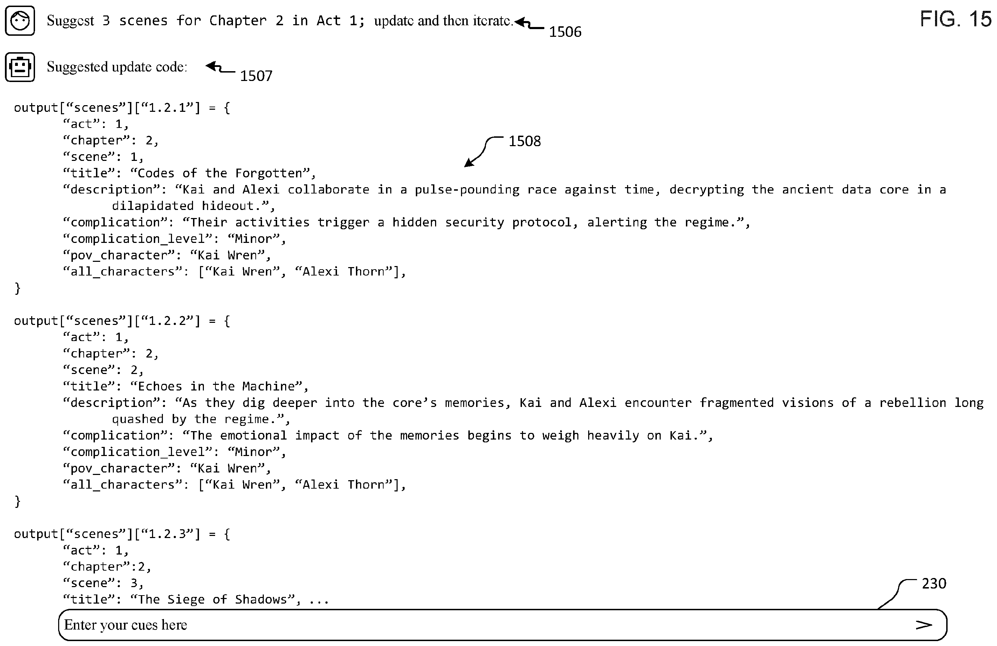

Fig. 15 shows another illustrative digital display to assist the user in updating the scenes of the second act of the specification. The scenes are updated, for instance, when the user rejects the suggestions or submits their own suggestions, as described in the scenario of Fig. 14. As with other parts of the specification, generation of the scenes are based on one or more of the previously accepted story setup updates, character updates, character relationship updates, act updates, and/or scene updates (e.g., the scenes of act one). In one implementation, the display of Fig. 15 sequentially follows the code generation shown in Fig. 14.

Continuing with the preceding scenario, the display of Fig. 15 includes text 1506 indicating that the user has requested that the system suggest three scenes for chapter two in act one, as well as to update and iterate the specification. The user has alternatively selected the update scenes button 221 of the display of Fig. 2. A message 1507 lays out a new suggested outline for chapters to be included in the scenes. After reviewing the code 1508, the user can type in cues to direct changes into field 230 to affect the generation of a new, updated suggestion.

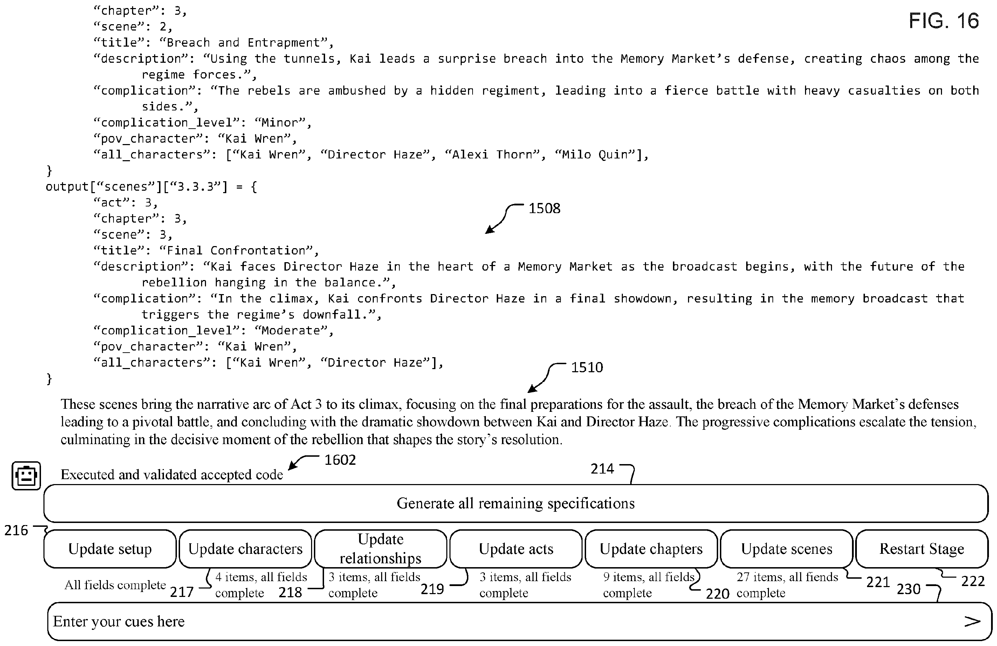

Fig. 16 shows another illustrative digital display configured to assist the user in updating all remaining parts of the specification. The empty fields associated with the specification are automatically updated when the user selects the generate all remaining specifications button 214. More particularly, the generate all remaining specifications button 214 is selected by the user to have the Al populate all remaining fields of each of the respective specification components associated with each of: the update setup button 216, the update characters button 217, the update relationship button 218, the update acts button 219, the update chapters button 220, and the update scenes button 221.

As with other suggested parts of the specification, generation of the remaining portions of the specification are based on one or more of the previously accepted story setup updates, character updates, character relationship updates, act updates, and scene updates. In one implementation, the display of Fig. 16 sequentially follows the code generation shown in Fig. 15. As such, Fig. 16 includes conversational-style code 1508 and text 1510 in human language that has been generated in response to the text 1506 reflective of the user input of Fig. 15. A message 1602 indicates that the code 1508 has been validated and executed.

Although examples of the preceding figures have populated fields with various specification parts using buttons 216-222, some fields remain unspecified. The generate all remaining specifications button 214 allows the Al to finish those aspects of the specification that the user is not interested in completing themselves. After selection of the button, the fields of each part of the specification are populated and complete, as indicated by text positioned under each corresponding button 217-221. The user may still enter cues in the field 230 to affect a newly generated suggestion. The field 230 directly informs the Al as to what ideas the user wants changed in the generated specification.

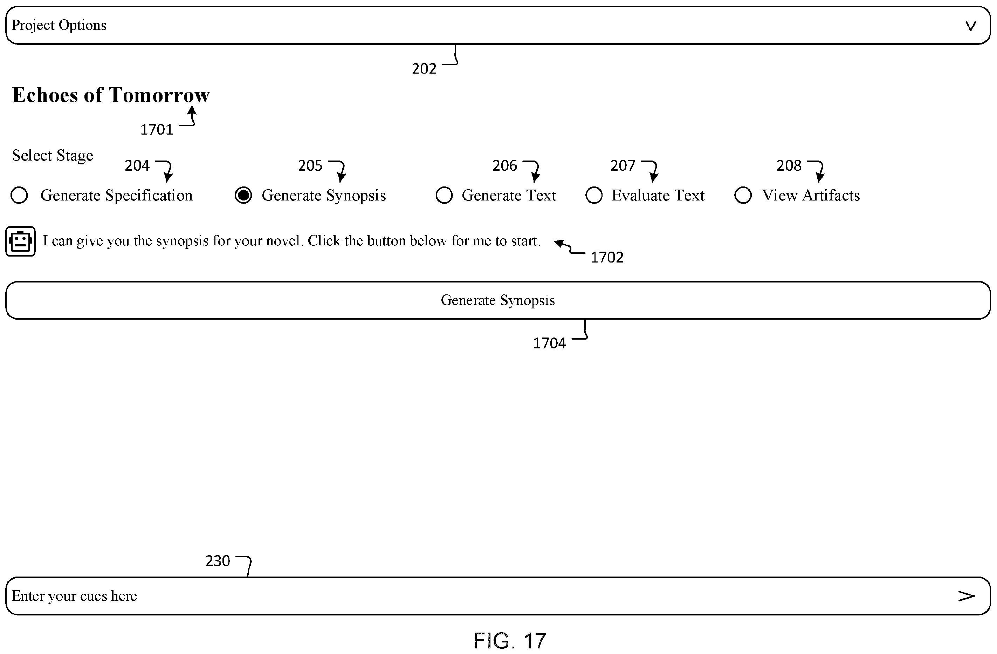

Fig. 17 is an illustrative digital display to assist the user in generating an Al developed synopsis according to the specification that has been progressively developed in the preceding figures. Fig. 17 is similar to the display of Fig. 2, where the user has selected button 204 corresponding to a stage for generating the specification. Now that the specification has been generated, the user has selected button 205 corresponding to a stage for generating a synopsis. In response, the specification agent displays text 1702 informing the user that the system can guide them through the generation of the synopsis stage by selecting the generate synopsis button 1704. The approved title 1701 is displayed for viewing.

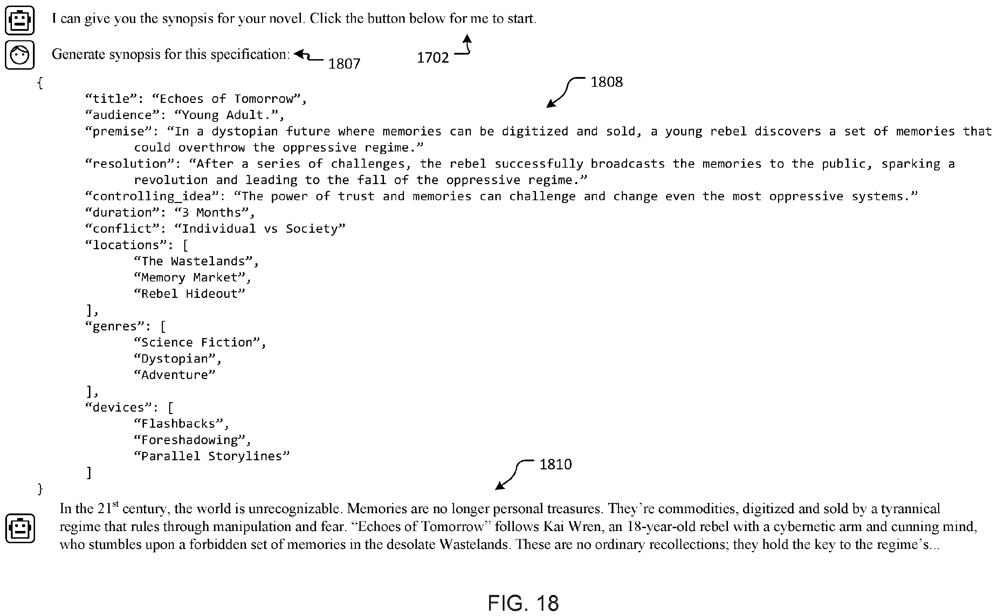

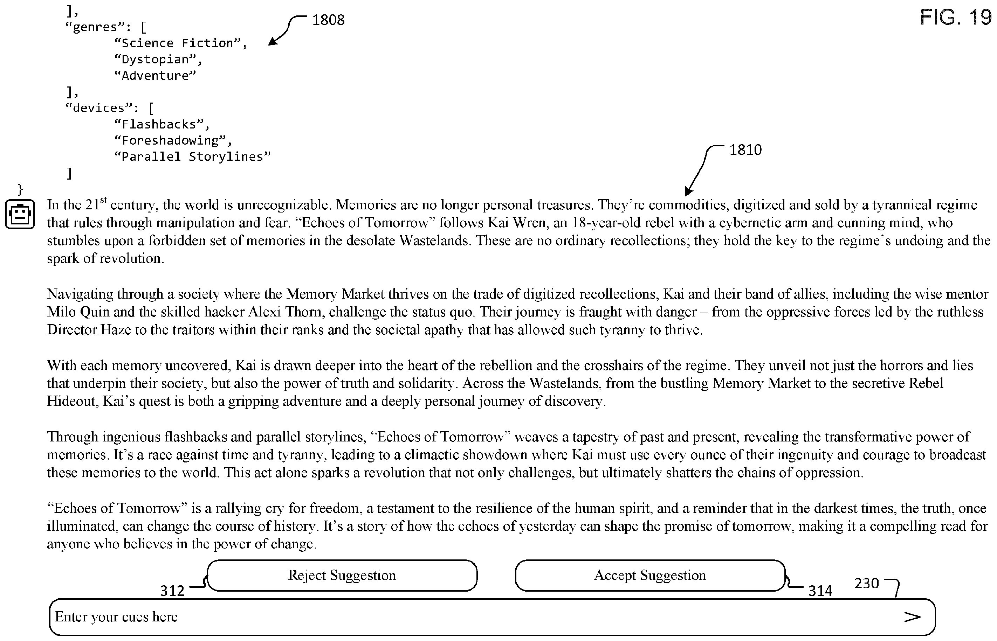

Fig. 18 is another illustrative digital display to assist the user in generating an Al developed synopsis of the substance of the specification. Generation of the synopsis is based on one or more of the previously accepted story setups, characters, relationships, acts, chapters, and scenes of the specification. In one implementation, the display of Fig. 18 sequentially follows that of Fig. 17. As such, the display of Fig. 18 includes text 1807 that indicates the nature of generated, conversational-style code 1808. After reviewing the code 1808 and associated human language text 1810, the user can accept or reject the synopsis using buttons 312 or 314 of Fig. 19, respectively. The user may alternatively enter cues to direct changes into field 230 to affect the generation of a new, updated suggestion for the synopsis.

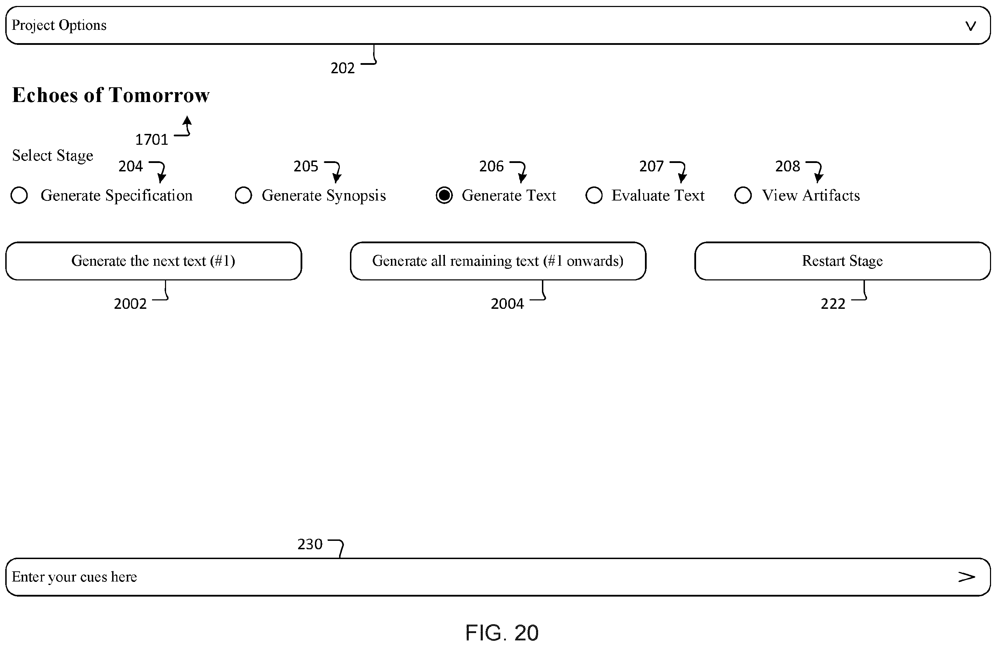

Fig. 20 is an illustrative digital display to assist the user in generating an Al authored text according to the specification that has been progressively developed in the preceding figures. Fig. 20 is similar to the display of Fig. 17, which assisted the user with generating the synopsis. In Fig. 20, the user has selected button 206 corresponding to a stage for generating the text for a novel with displayed title 1701. To this end, the system presents the user with buttons 2002, 2004, and 222. More particularly, selecting the "generate the next text (#1)" button 2002 initiates the generation agent outputting text of a first portion of the long-narrative work based on the specification.

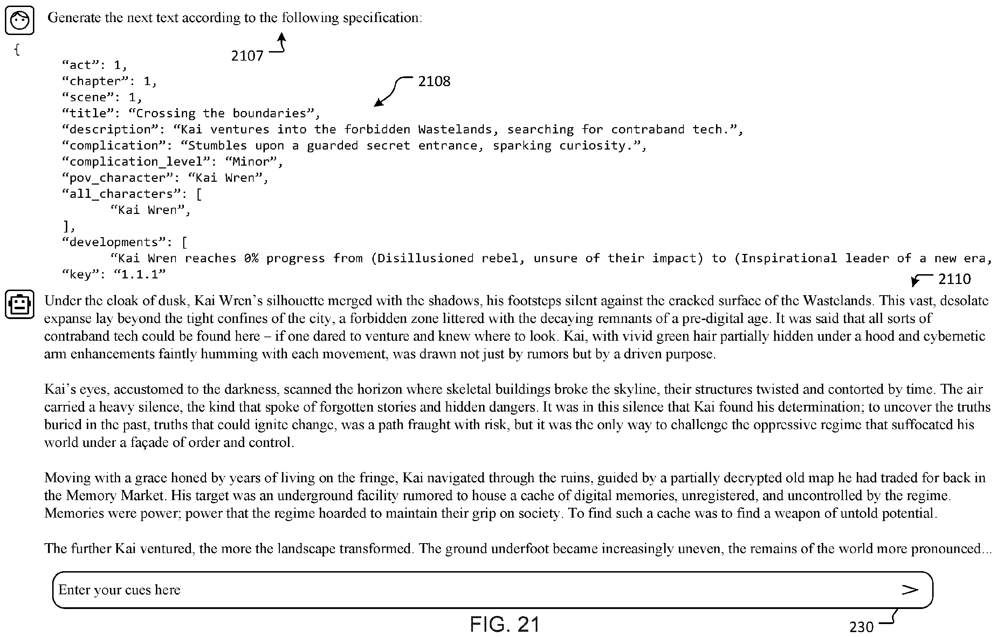

Fig. 21 is an illustrative digital display that includes text 2107 that indicates the nature of the conversational-style code 2108 that corresponds to text 2110 to be generated based on the approved specification. As explained in connection with Fig. 1, unit specifications are generated by the serializer. As such, the unit specifications are programmatically generated and supplied as input to the generation agent. The code 2108 is directed to the first scene of the first chapter of the first act of the specification. The generation agent outputs text 2110 corresponding to the conversational-style code 2108 for review by the user. At any time, the user may enter cues into the field 230 to affect the generation of a new, updated suggestion for the text.

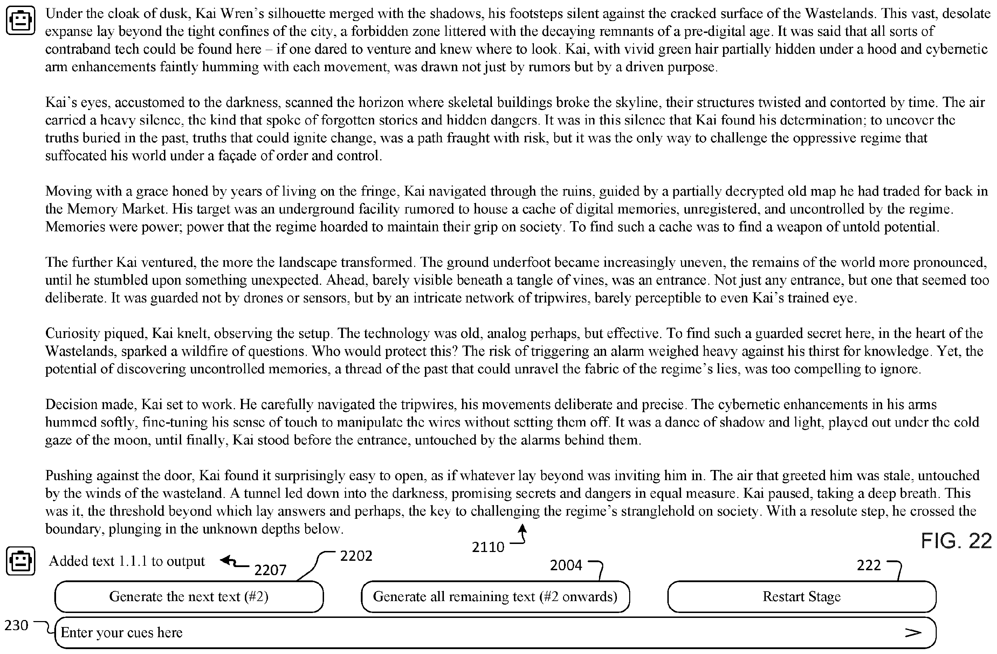

Fig. 22 is an illustrative digital display to assist in generating the Al developed text according to the approved specification. The display continues the presentation of the Al authored text 2110 initiated in Fig. 21. A message 2207 confirms that the text 2110 has been added to what will be output as the final text.

The user is presented with button 2202 to initiate generation of a next text portion, and button 2004 to alternatively initiate the generation of all remaining text. The next generated portion initiated by the selection of button 2202 is the next sequential scene in the same act. As with prior displays, the user may alternatively choose to restart the stage at 222 or enter cues directly at 230.

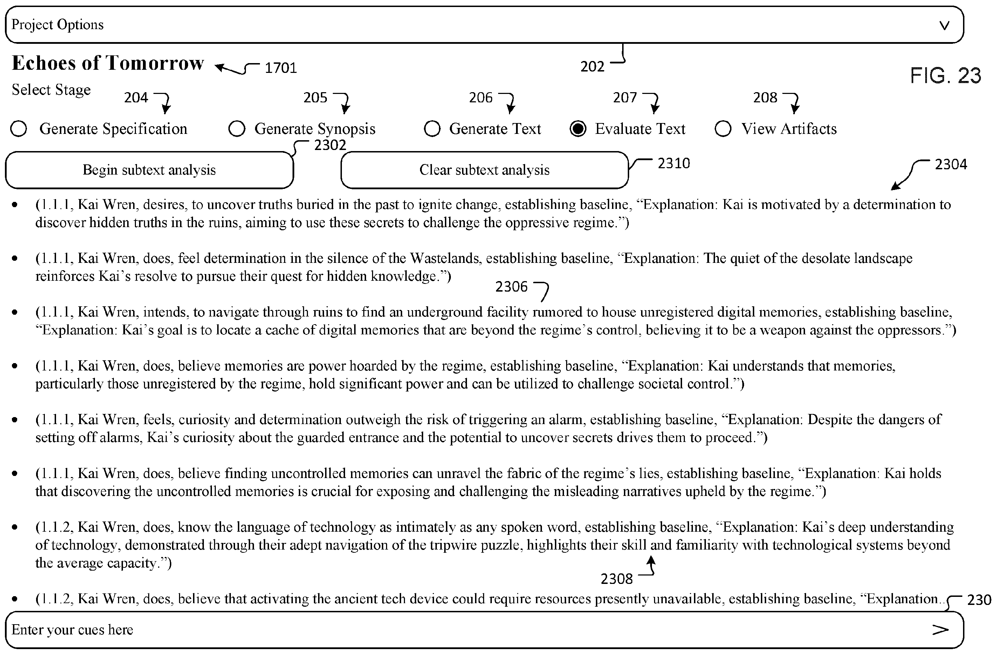

Fig. 23 is an illustrative digital display to assist the user in evaluating the Al text that was generated according to the specification for continuity. Fig. 23 is similar to the display of Fig. 20, which assisted the user with generating the text. In Fig. 23, the user has selected button 207 corresponding to a stage for evaluating the text. To this end, the system presents the user with a begin subtext analysis button 2302. In response to selection of button 2302, the system displays subtext 2304 generated using the output text. Each subtext 2304 is preceded by an identification of where it fits in the sequence of the output text. For instance, the subtext 2306 preceded by "1.1.1" corresponds to text generated in the first scene of the first chapter of the first act. The subtext 2308 preceded by "1.1.2" corresponds to text generated in the second scene of the first chapter of the first act. Another button 2310 allows the user to clear subtext analysis.

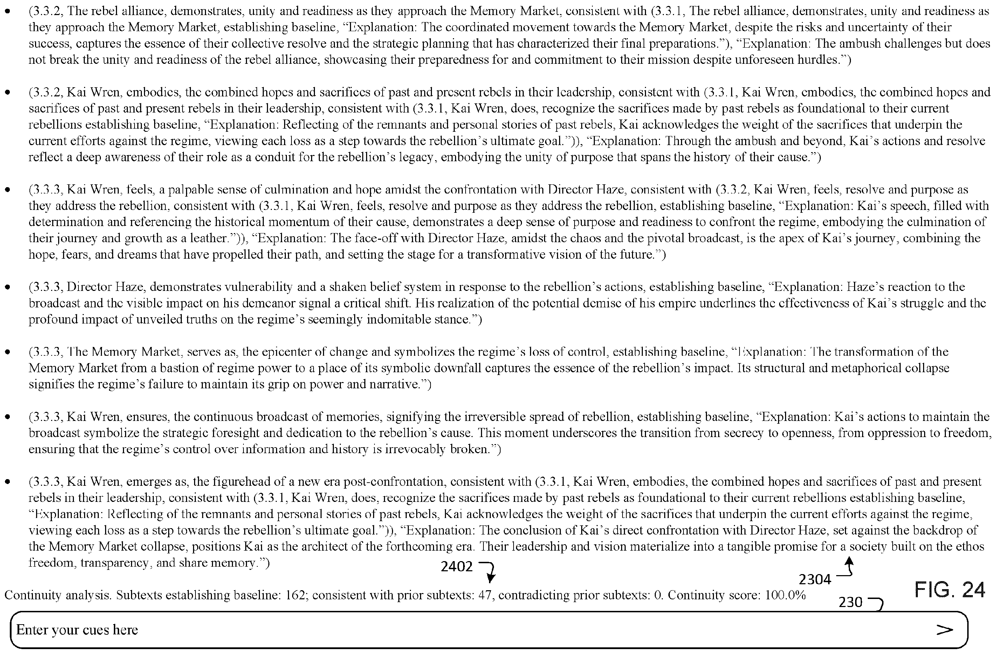

Fig. 24 is an illustrative digital display to assist the user in evaluating the continuity of the Al text that was generated according to the specification. The display continues the presentation of the subtext 2304 begun in Fig. 23. A message 2402 reports on the accuracy of the continuity of the automatically evaluated subtext 2304. More particularly, evaluation criteria used to automatically evaluate the subtext 2304 is based on an established subtext baseline, a consistency with prior subtexts, and a contradiction with prior subtexts. The message 2402 validates the continuity of the subtext with a one hundred percent continuity score. As with prior displays, the user may alternatively choose to restart the stage at 222 or enter cues directly at 230.

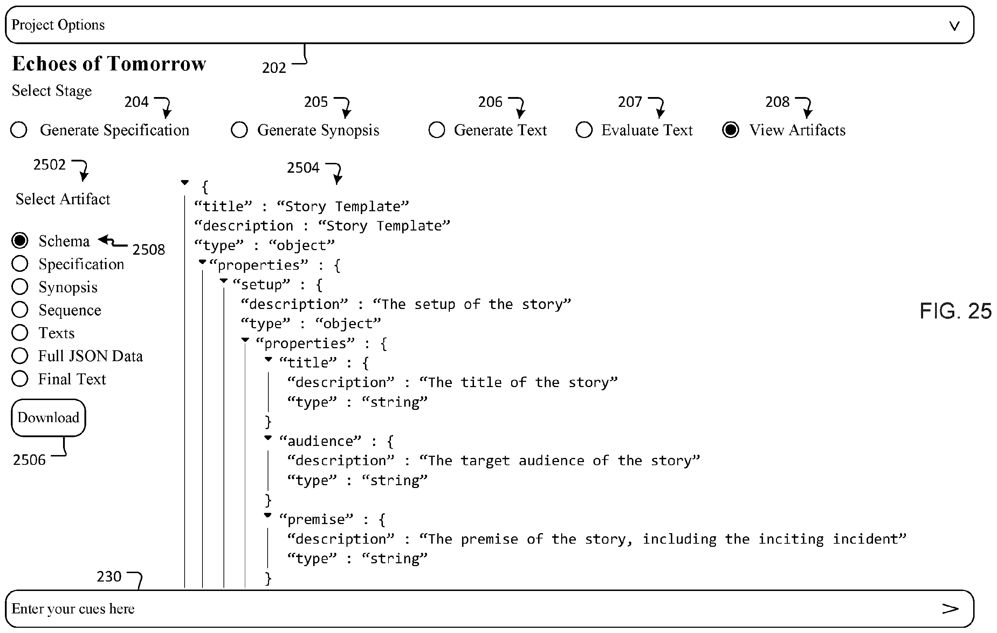

Fig. 25 is a digital display to assist the user in evaluating the schema driving the generation of the specification by selecting the view artifacts stage. The user has selected the schema button 2508 from column 2502 after selecting button 208 corresponding to the view artifacts stage. As shown in Fig. 25, a list of artifacts includes: the schema, the specification, the synopsis, the sequence, the texts, the full JSON data, and the final text. Selecting the download button 2506 initiates a display of the schema 2504. As described herein, some examples of a schema include a declarative and machine-readable data format to be used to generate the novel or other long-form text. The displayed schema 2504 is formatted according to JSON specifications. The schema 2504 used to generate the current specification is displayed in response to the schema selection 2508 from the artifacts column 2502.

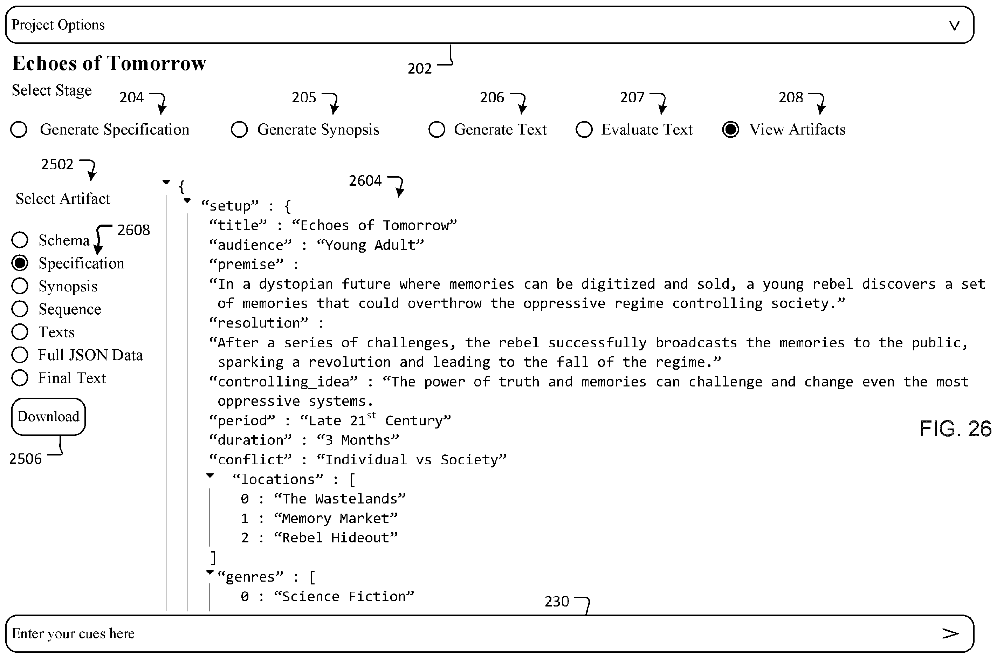

Fig. 26 is a digital display to assist the user in evaluating a formatted representation of the specification 2604 that has been progressively developed throughout the preceding figures. As shown in the display, the user is still operating within the view artifacts stage. More particularly, the user has selected button 208, as well as the specification button 2608 from column 2502. As shown in Fig. 26, selecting the download button 2506 initiates a display of the basic components of the specification 2604.

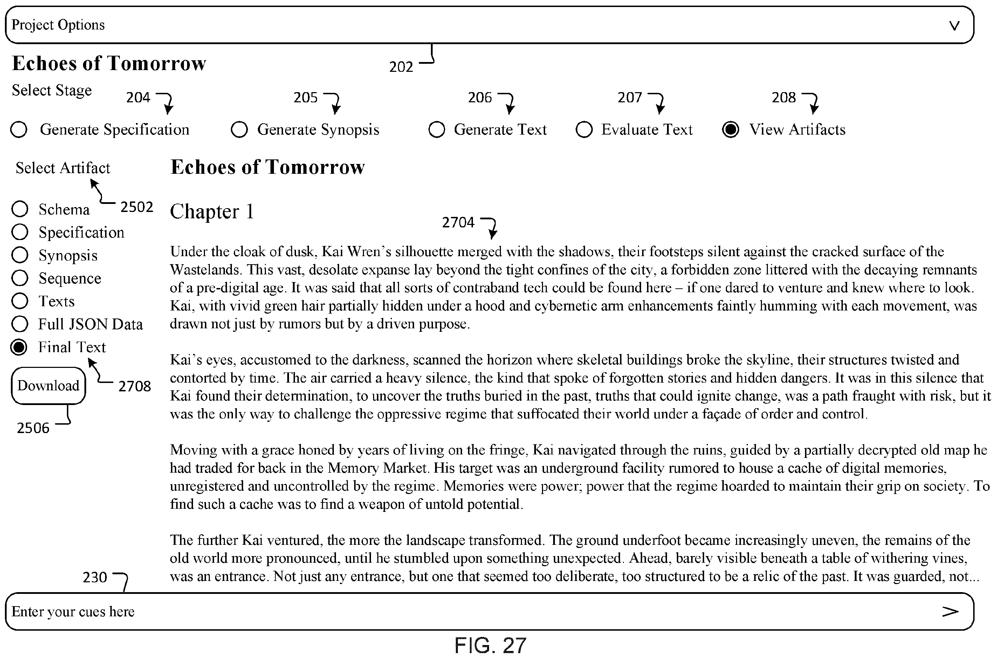

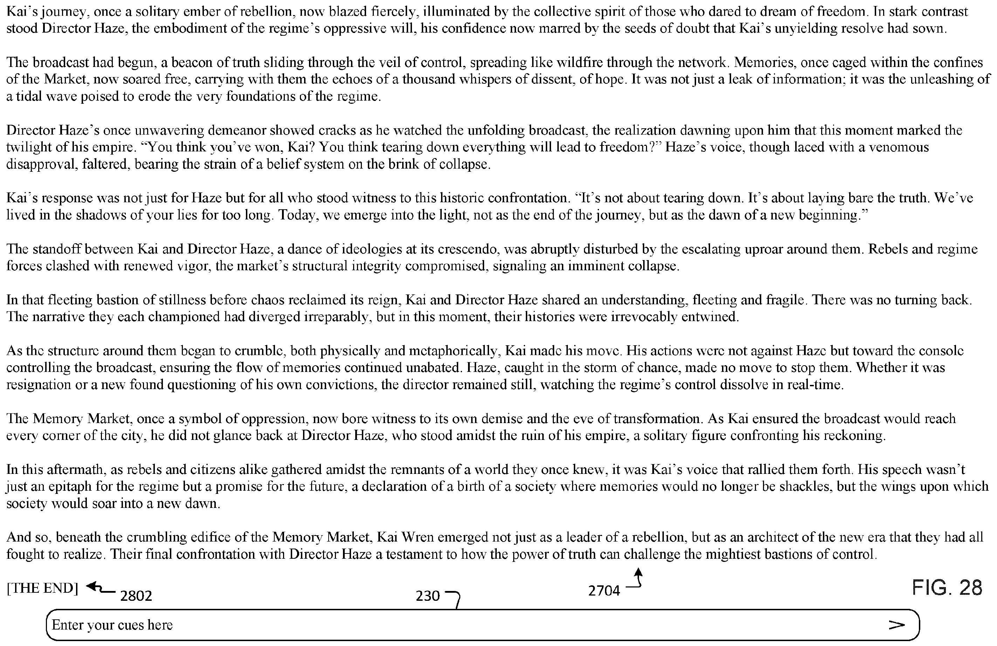

Fig. 27 is a digital display to assist the user in evaluating the final text 2704 that has been progressively developed using the specification. As shown in the display, the user is still operating within the view artifacts stage. More particularly, the user has selected button 208, as well as the final text button 2708 from column 2502. As shown in Fig. 27, selecting the download button 2506 initiates a display of the final text 2704. As with prior displays, the user may alternatively choose to restart the stage at 222 or enter cues directly at 230. Fig. 28 is a continuation of the display of Fig. 27. As indicated by the script 2802, Fig. 28 includes the remainder of the output, final text 2704.

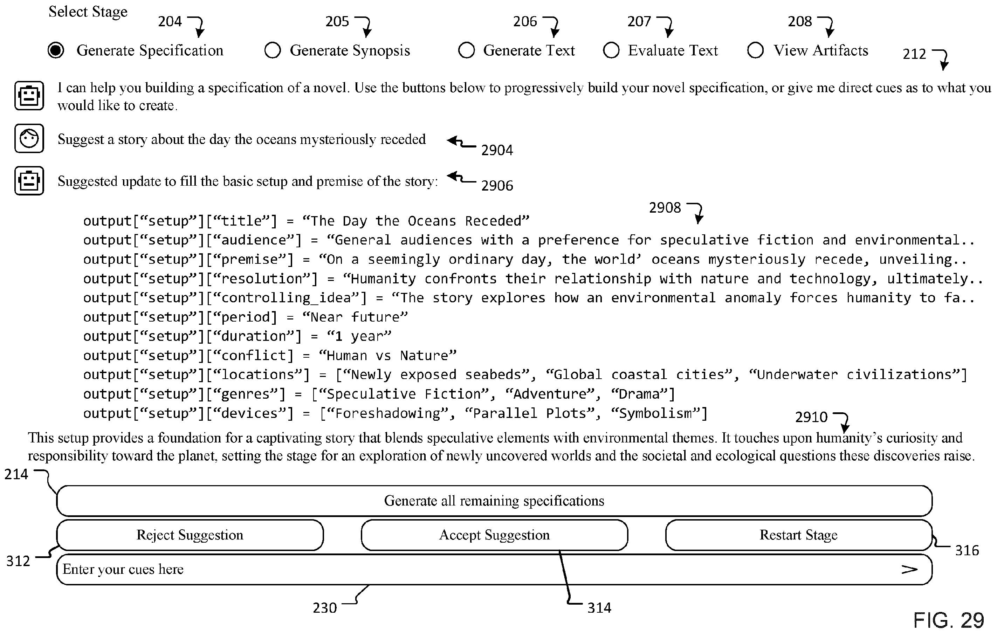

Fig. 29 is an illustrative digital display to assist the user in developing an Al-generated specification in response to the user prompt 2904 directed to the premise of long-narrative text. The user prompt 2904 represents a more user-driven approach to progressively generating a long-narrative text than the more structured programmatic methodology explained in connection with Fig. 2. More particularly, the user In Fig. 2 uses buttons 216-221 to have the system originate and suggest ideas for updating the characters, the setup, and relationships, among other aspects of the specification.

In Fig. 29, the user has again selected button 204 for the generate specification stage and is presented with the prompt 212 that reads how the system can build a specification. Instead of using buttons 216-221 shown in Fig. 2, the user in Fig. 29 submits the prompt 2904 directly. In some examples, the user types in or speaks the prompt 2904 in the field 230.

In response to the prompt 2904, the generation agent at 2906 suggests updates for review by the user. More particularly, the user reviews suggested text and code that includes physical descriptions, names, initial/final states, storylines, and other ingredients of a suggested setup. That setup is presented in human readable code or in some other categorical manner for review. A human language string of text 2910 additionally presents the suggestion embodied in the code 2908 in conventional human terminology.

After reviewing the code 2908 and text 2910, the user is prompted to select one of reject suggestion button 312, accept suggestion button 314, or restart the stage button 316. Rejecting the selection causes the system to discard the code 2908 and text 2910 and generate another scenario. Accepting the suggestion causes the system to further develop other aspects of the specification based on the accepted setup. The restart stage button 316 takes the user back to an initial display (e.g., Fig. 2) to restart the specification stage. Alternatively or additionally, the user can select button 214 to generate all remaining specifications or can enter cues of their own into field 230 to initiate the output of an updated suggestion that was generated according to the new prompt.

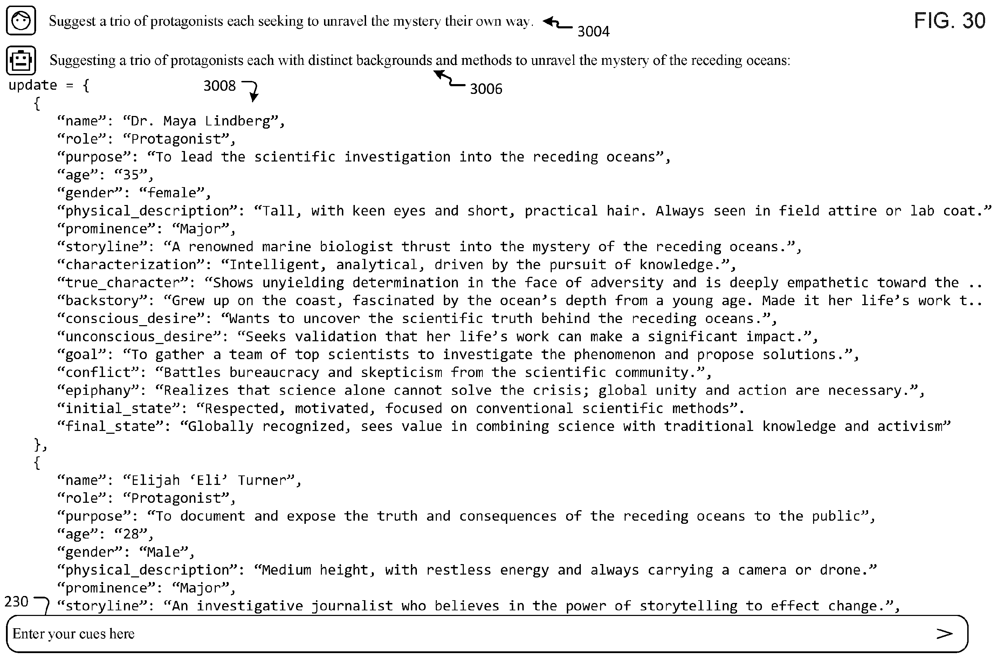

Fig. 30 is another illustrative digital display to assist the user in developing the Al-generated specification in response to a further user prompt 3004 directed to a protagonist in the setup of Fig. 29. Fig. 30 is thus a continuation of the user prompt driven scenario explained in Fig. 29. More particularly, the user has accepted the suggestions of the previous figure and now enters a second prompt 3006 to build upon and otherwise develop the previously approved suggestion.

In response to the prompt 3004, the generation agent at 3006 suggests additional updates for review by the user. The user reviews conversation-style code 3008 that presents additional conflicts, storylines and other ingredients of the suggested setup in human readable code. A human language string of text 2910 presents the suggestion embodied in the code 2908 in conventional human terminology. After reviewing the code 3008 and corresponding text (not shown), the user is prompted to select one of reject suggestion button 312, accept suggestion button 314, or restart the stage button 316.

Rejecting the selection causes the system to discard the code 3008 and generate another scenario. Accepting the suggestion causes the system to further develop other aspects of the specification based on the accepted setup. The restart stage button 316 takes the user back to an initial display to restart the specification stage. Alternatively or additionally, the user can select button 214 to generate all remaining specifications or can enter more cues of their own into field 230 to initiate the output of an updated suggestion that was generated according to the new prompt.

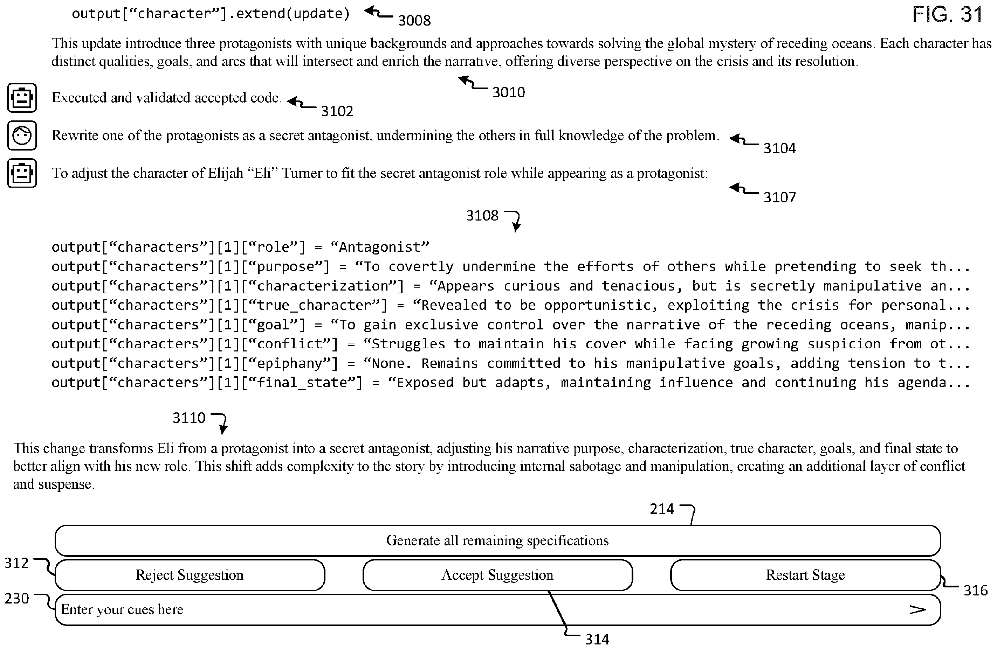

Fig. 31 is another illustrative digital display to assist the user in developing the Al-generated specification by updating an existing character in response to a new user prompt 3104. Fig. 31 displays the code 3008 initially generated in Fig. 30, as well as text 3010 (e.g., in sentence format) describing the update. A message 3102 evidences that the user has accepted the suggestion embodied by the code 3008 and text 3010. In response to the new prompt 3104, the generation agent suggests at 3107 additional updates that are consistent with the user prompt 3204. More particularly, the suggestion 3107 proposes rewriting a character as a secret antagonist. New code 3108 and text 3110 are generated pursuant to the approved specification and according to the prompt 3104 and mirrored suggestion 3107.

After reviewing the code 3108 and text 3110, the user is prompted to select one of a reject suggestion button 312, an accept suggestion button 314, or a restart the stage button 316. Alternatively or additionally, the user can select button 214 to generate all remaining specifications or can enter more prompts, or cues, of their own into field 230 to initiate the output of an updated suggestion by the generation agent.

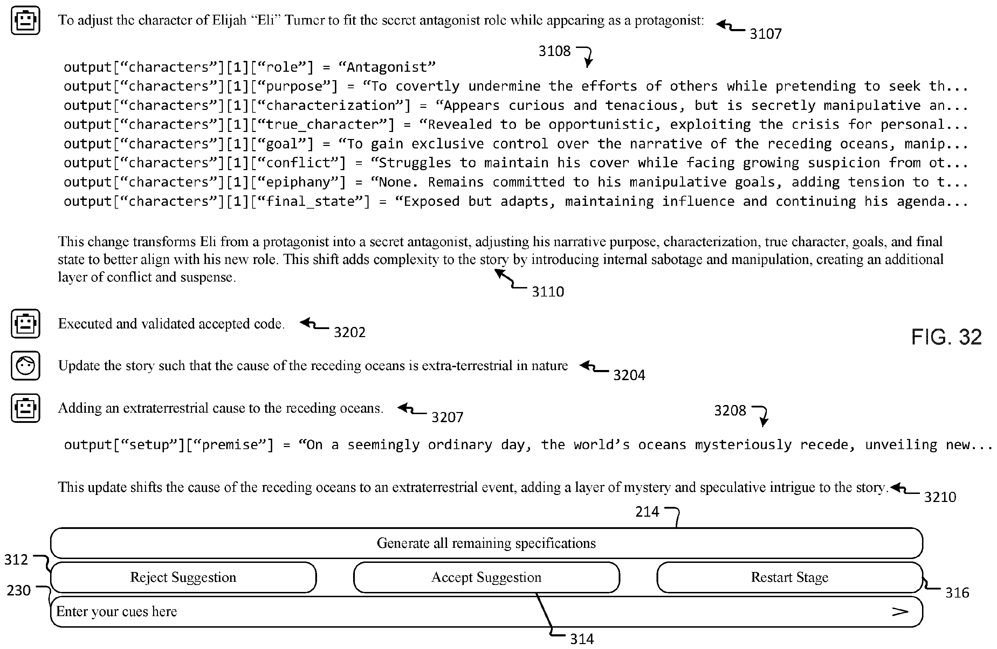

Fig. 32 is another illustrative digital display to assist the user in developing the Al-generated specification by updating an already-specified premise in response to a new user prompt 3204. Fig. 32 displays the code 3108 initially generated in Fig. 31, as well as text 3110 describing the update. A message 3202 indicates that the user has accepted the suggestions embodied by the code 3108 and text 3110. In response to the new prompt 3204, the generation agent at 3207 suggests additional updates that mirror the user prompt 3204. More particularly, the suggestion 3207 proposes to rewrite the storyline such that an extraterrestrial causes receding oceans.

New code 3208 and text 3210 are generated pursuant to the approved specification and according to the prompt 3204 and mirrored suggestion 3207. After reviewing the code 3208 and text 3210, the user is prompted to select one of reject suggestion button 312, accept suggestion button 314, or restart the stage button 316. Alternatively or additionally, the user can select button 214 to generate all remaining specifications or can enter more prompts, or cues, of their own into field 230 to initiate the output of an updated suggestion by the generation agent.

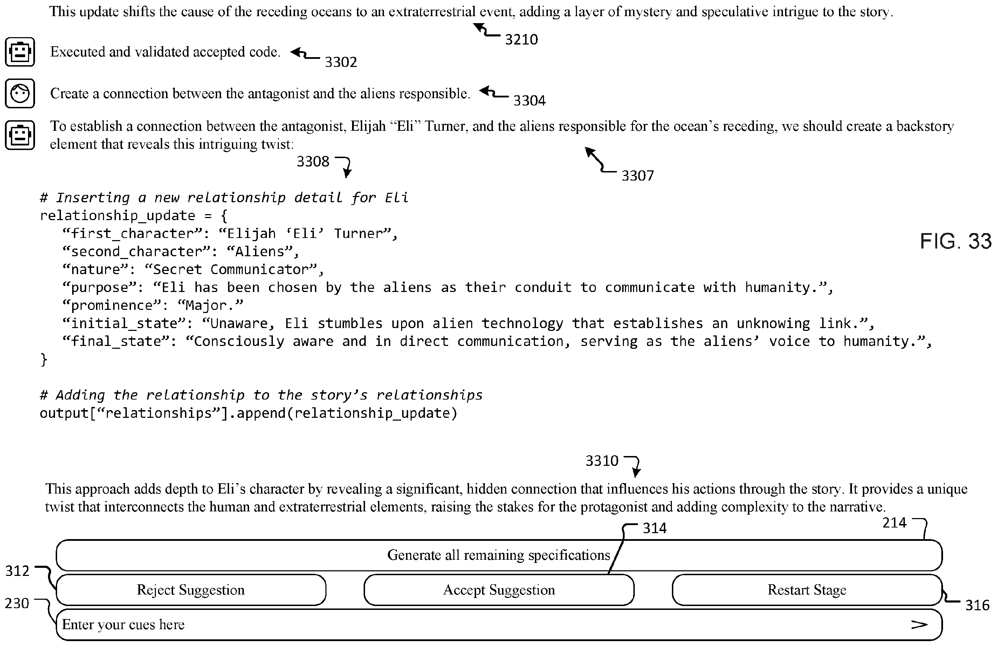

Fig. 33 is another illustrative digital display to assist the user in developing the Al-generated specification by updating a relationship between already-specified characters in response to a new user prompt 3304. Fig. 33 displays the code 3208 initially generated in Fig. 32, as well as text 3210 characterizing the update. A message 3302 indicates that the user has accepted the suggestions embodied by the code 3208 and text 3210. In response to the new prompt 3304, the generation agent suggests at 3307 additional updates that mirror the user prompt 3304. More particularly, the suggestion 3307 proposes to update a backstory to set up a connection between the antagonist and the aliens.

New code 3308 and a text 3310 are generated pursuant to the approved specification and according to the prompt 3304 and mirrored suggestion 3307. After reviewing the code 3308 and text 3310, the user is prompted to select one of reject suggestion button 312, accept suggestion button 314, or restart the stage button 316. Alternatively or additionally, the user can select button 214 to generate all remaining specifications or can enter more prompts, or cues, of their own into field 230 to initiate the output of an updated suggestion by the generation agent.

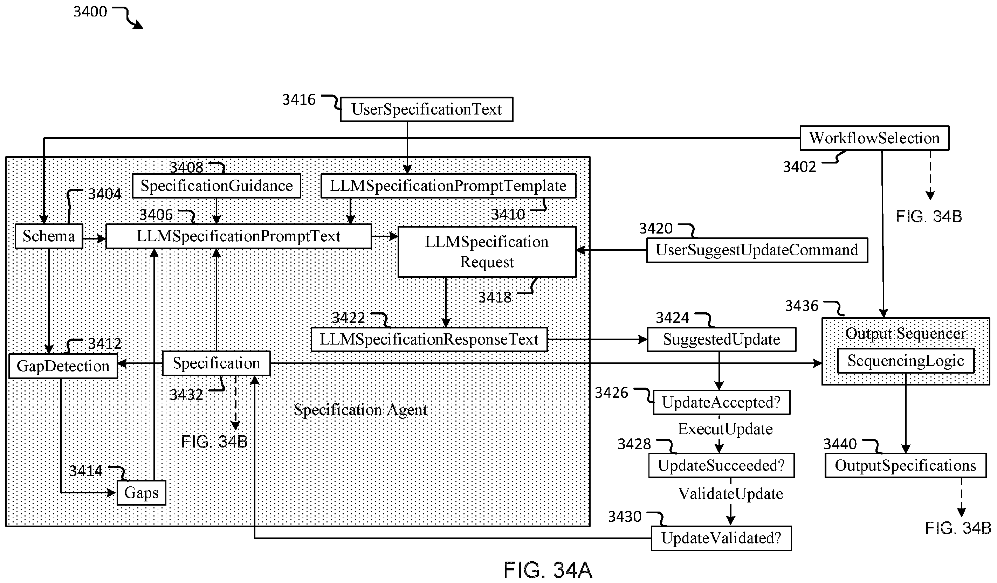

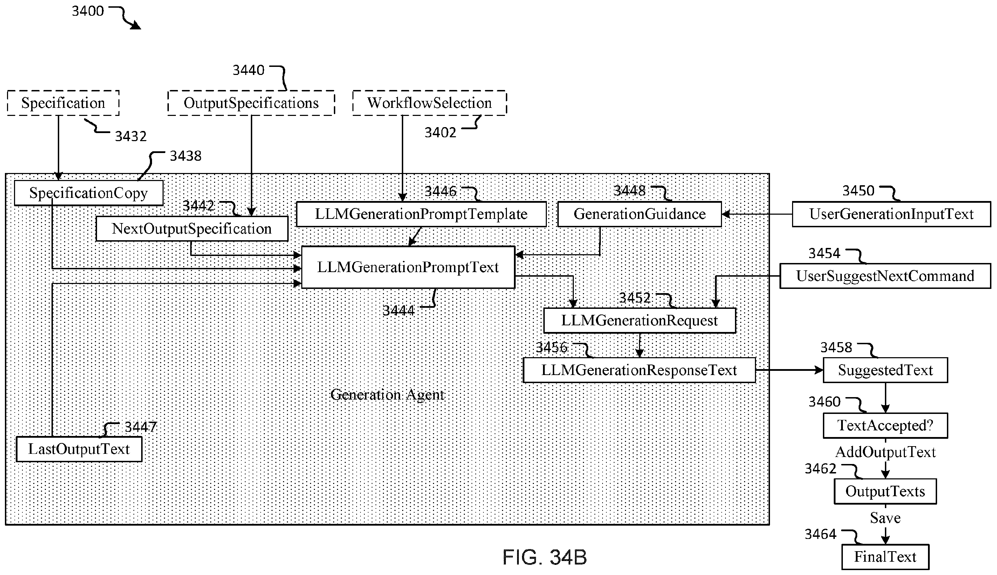

Fig. 34A and 34B show a flowchart of an example of a device-implemented method 3400 of generating a long-form text. According to some implementations, the method 3400 provides the schema that includes a declarative and machine-readable data format used to generate the long-form text. Based on the schema, the processes iteratively generate suggested code to populate the specification, which provides the narrative framework of the long-form text. The interactive nature of the specification development allows the user to progressively update and confirm the suggestions. In this manner, the specification is updated according to approved code selected from the iteratively generated code. Additional processes serialize the specification to generate multiple unit specifications. Serializing the specification includes generating at least one of the unit specifications based on a previously generated unit specification. The LLM in some examples is used to generate the long-form text based on the unit specifications.

Turning more particularly to Fig. 34A, the method 3400 includes using a workflow selector at block 3402 to steer computing resources towards using the specification agent to progressively generate a schema at block 3404, such as the schema shown in Fig. 25. In some examples, the schema is formatted according to JSON specifications. The schema is used to generate at block 3406 an LLM specification prompt text, along with specification guidance 3408, a prompt template 3410, and gap detection results at blocks 3412, 3414. The LLM specification prompt text may initiate at block 3416 a user specification text, such as is shown in Fig. 2.

The specification prompt text is used at block 3418 to generate a specification request. The user suggested update command is additionally used at block 3420 to generate the specification text. For example, the user in Fig. 3 suggests an update to the setup of the specification. The specification request, in turn, is used to generate at block 3422 a specification response text.

A suggested update is output at block 3424 for review. For instance, the user in Fig. 8 is presented with the text 812 describing the relationship update. If the update is accepted at block 3426, then it is executed and validated at blocks 3428 and 3430. An accepted and validated suggestion is used at block 3432 to generate the specification. The generated specification is used for future gap detection at block 3412 and is provided at block 3436 to an output sequencer. The output sequencer applies sequencing logic at block 3436 to generate at block 3440 multiple output specifications.

As shown in Fig. 34B, the output specifications at block 3440 (also shown in Fig. 34A) are provided to the generation agent at 3442. A copy of the specification is also provided to the generation agent at block 3438 (i.e., from the specification agent at block 3440 of Fig. 34A). User generation input text is received at block 3450 and used at block 3448 to output generation guidance. A workflow selection output (from Fig. 34A) to the generation agent initiates an LLM generation prompt template at block 3446. The generation agent combines inputs from the specification copy, the generation guidance, the generation prompt template, the next output specification, as well as the last N texts, to output a generation prompt text at block 3444.

The generation prompt text is used at block 3452 to output a generation request. The generation request is used to output a generation response text at block 3456. The generation response text is presented at block 3458 to the user as suggested text. For example, the display of Fig. 28 presents suggested text 2704 to the user. The user may accept and output the text at blocks 3460 and 3462 to generate and save the final text at block 3464.

Prior to the generation of the final text at block 3464, the method 3400 presents the user via the specification agent with contextual narratives. The contextual ideas are used to develop finer narrative details, such as a complication for each scene of every act, as well as characters and their actions. The method 3400 iteratively prompts the user at block 3426 to review suggested output at different stages of a story's progression. The iterative feedback process steers the drafting of the specification at block 3432 as it is being automatically generated. In this manner, the method 3400 combines suggestions with incremental user feedback to enable the iterative development of the plot and character transformations. The method 3400 provides an ability to adapt and update generated suggestions to dynamically influence the actual story as it is drafted. The iterative post processing opportunity additionally keeps the Al on track regarding the long-form continuity (e.g., gap detection at block 3412) of the framework of the story.

The order in which the disclosed, associated methods are described is not intended to be construed as a limitation, and any number of the described acts can be combined in any order to implement the method, or an alternate method. Furthermore, the methods can be implemented in any suitable hardware, software, firmware, or combination thereof, such that a computing device can implement the method. In one case, the methods are stored on one or more computer-readable storage medium/media as a set of instructions such that execution by a processor of a computing device causes the computing device to perform the method.

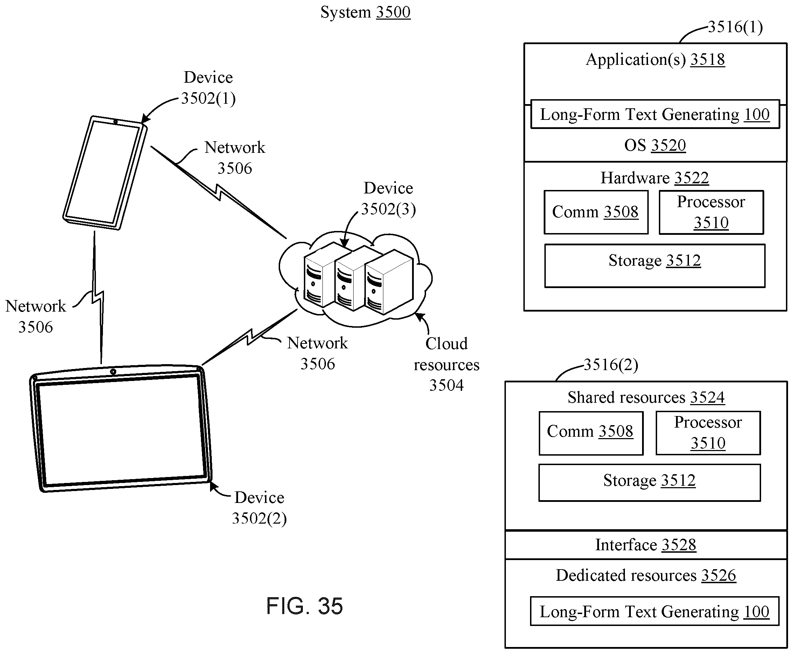

As described herein, the present concepts relate to the cause and solution of the technical continuity problem faced by conventional Al by focusing on the structured, progressive task of generating a long-form text. Fig. 35 illustrates the present concepts applied to an example networked system 3500.

Fig. 35 shows an example computing system 3500. System 3500 can include computing devices 3502. In the illustrated configuration, computing device 3502(1) is manifest as a smartphone, computing device 3502(2) is manifest as a tablet type device, and computing device 3502(3) is manifest as a server type computing device, such as may be found in a datacenter as a cloud resource 3504. Computing devices 3502 can be coupled via one or more networks 3506 that are represented by lightning bolts. In some cases, some of the computing devices 3502 can function as edge devices between other computing devices.

Computing devices 3502 can include a communication component 3508, a processor 3510, storage resources (e.g., storage) 3512, and/or long-form text generating system 100. For instance, the long-form text generating system 100 includes modules, agents, components, and/or algorithms described with reference to Fig. 1. The long-form text generating system 100 can be implemented as an application, framework, and/or service. The long-form text generating system 100 can be implemented locally (e.g., on the user's device), on an edge device, and/or remotely, such as in the cloud.

FIG. 35 shows two device configurations 3516 that can be employed by computing devices 3502. Individual computing devices 3502 can employ either configurations 3516(1) or 3516(2), or an alternate configuration. Due to space constraints on the drawing page, one instance of each configuration is illustrated. Briefly, device configuration 3516(1) represents an operating system (OS) centric configuration. Device configuration 3516(2) represents a system on a chip (SOC) configuration. Device configuration 3516(1) is organized into one or more applications 3518, an operating system 3520, and hardware 3522. Device configuration 3516(2) is organized into shared resources 3524, dedicated resources 3526, and an interface 3528 therebetween.

In configuration 3516(1), the long-form text generating system 100 can be manifest as part of the operating system 3520. Alternatively, the long-form text generating system 100 can be manifest as part of the applications 3518 that operate in conjunction with the operating system 3520 and/or processor 3510. In configuration 3516(2), the long-form text generating system 100 can be manifest as part of the processor 3510 or a dedicated resource 3526 that operates cooperatively with the processor 3510.

In some configurations, each of computing devices 3502 can have an instance of the long-form text generating system 100. However, the functionalities that can be performed by the long-form text generating system 100 may be the same or they may be different from one another when comparing computing devices. For instance, in some cases, each long-form text generating system 100 can be robust and provide all of the functionality described above and below (e.g., a device-centric implementation).

In other cases, some devices can employ a less robust instance of the long-form text generating system 100 that relies on some functionality to be performed by another device.

The term "device," "computer," or "computing device" as used herein can mean any type of device that has some amount of processing capability and/or storage capability. Processing capability can be provided by one or more processors that can execute data in the form of computer-readable instructions to provide a functionality. Data, such as computer-readable instructions and/or user-related data, can be stored in storage, such as storage that can be internal or external to the device. The storage can include any one or more of volatile or non-volatile memory, hard drives, flash storage devices, and/or optical storage devices (e.g., CDs, DVDs etc.), remote storage (e.g., cloud-based storage), among others. As used herein, the term "computer-readable media" can include signals. In contrast, the term "computer-readable storage media" excludes signals. Computer-readable storage media includes "computer-readable storage devices." Examples of computer-readable storage devices include volatile storage media, such as RAM, and non-volatile storage media, such as hard drives, optical discs, and flash memory, among others.

As mentioned above, device configuration 3516(2) can be thought of as a system on a chip (SOC) type design. In such a case, functionality provided by the device can be integrated on a single SOC or multiple coupled SOCs. One or more processors 3510 can be configured to coordinate with shared resources 3524, such as storage 3512, etc., and/or one or more dedicated resources 3526, such as hardware blocks configured to perform certain specific functionality. Thus, the term "processor" as used herein can also refer to central processing units (CPUs), graphical processing units (GPUs), neural processing units (NPUs), field programable gate arrays (FPGAs), controllers, microcontrollers, processor cores, hardware processing units, or other types of processing devices.

Generally, any of the functions described herein can be implemented using software, firmware, hardware (e.g., fixed-logic circuitry), or a combination of these implementations. The term "component" as used herein generally represents software, firmware, hardware, whole devices or networks, or a combination thereof. In the case of a software implementation, for instance, these may represent program code that performs specified tasks when executed on a processor (e.g., CPU, CPUs, GPU or GPUs). The program code can be stored in one or more computer-readable memory devices, such as computer-readable storage media. The features and techniques of the components are platform-independent, meaning that they may be implemented on a variety of commercial computing platforms having a variety of processing configurations.

### MACHINE LEARNING OVERVIEW

There are various types of machine learning frameworks that can be trained to perform a given task. Support vector machines, decision trees, and neural networks are just a few examples of machine learning frameworks that have been used in a wide variety of applications, such as image processing and natural language processing. Some machine learning frameworks, such as neural networks, use layers of nodes that perform specific operations.

In a neural network, nodes are connected to one another via one or more edges. A neural network can include an input layer, an output layer, and one or more intermediate layers. Individual nodes can process their respective inputs according to a predefined function, and provide an output to a subsequent layer, or, in some cases, a previous layer. The inputs to a given node can be multiplied by a corresponding weight value for an edge between the input and the node. In addition, nodes can have individual bias values that are also used to produce outputs. Various training procedures can be applied to learn the edge weights and/or bias values. The term "parameters" when used without a modifier is used herein to refer to learnable values such as edge weights and bias values that can be learned by training a machine learning model, such as a neural network.

A neural network structure can have different layers that perform different specific functions. For example, one or more layers of nodes can collectively perform a specific operation, such as pooling, encoding, or convolution operations. For the purposes of this document, the term "layer" refers to a group of nodes that share inputs and outputs, e.g., to or from external sources or other layers in the network. The term "operation" refers to a function that can be performed by one or more layers of nodes. The term "model structure" refers to an overall architecture of a layered model, including the number of layers, the connectivity of the layers, and the type of operations performed by individual layers. The term "neural network structure" refers to the model structure of a neural network. The term "trained model" and/or "tuned model" refers to a model structure together with parameters for the model structure that have been trained or tuned. Note that two trained models can share the same model structure and yet have different values for the parameters, e.g., if the two models are trained on different training data or if there are underlying stochastic processes in the training process.

There are many machine learning tasks for which there is a relative lack of training data. One broad approach to training a model with limited task-specific training data for a particular task involves "transfer learning." In transfer learning, a model is first pretrained on another task for which significant training data is available, and then the model is tuned to the particular task using the task-specific training data.

The term "pretraining," as used herein, refers to model training on a set of pretraining data to adjust model parameters in a manner that allows for subsequent tuning of those model parameters to adapt the model for one or more specific tasks. In some cases, the pretraining can involve a self-supervised learning process on unlabeled pretraining data, where a "self-supervised" learning process involves learning from the structure of pretraining examples, potentially in the absence of explicit (e.g., manually provided) labels. Subsequent modification of model parameters obtained by pretraining is referred to herein as "tuning." Tuning can be performed for one or more tasks using supervised learning from explicitly labeled training data, in some cases using a different task for tuning than for pretraining.

### TERMINOLOGY

For the purposes of this document, the term "language model" refers to any type of automated agent that communicates via natural language. For instance, a language model can be implemented as a neural network, e.g., a decoder-based generative language model such as ChatGPT, a long short-term memory model, etc. The term "generative model," as used herein, refers to a machine learning model employed to generate new content. Generative models can be trained to predict items in sequences of training data. When employed in inference mode, the output of a generative model can include new sequences of items that the model generates. Thus, a "generative language model" is a model that can generate new sequences of text given some input prompt, e.g., a query potentially with some additional context.

The term "prompt," as used herein, refers to input text provided to a generative language model that the generative language model uses to generate output text. A prompt can include a query, e.g., a request for information from the generative language model. A prompt can also include context, or additional information that the generative language model uses to respond to the query.

The term "machine learning model" refers to any of a broad range of models that can learn to generate automated user input and/or application output by observing properties of past interactions between users and applications. For instance, a machine learning model could be a neural network, a support vector machine, a decision tree, a clustering algorithm, etc. In some cases, a machine learning model can be trained using labeled training data, a reward function, or other mechanisms, and in other cases, a machine learning model can learn by analyzing data without explicit labels or rewards. The term "user-specific model" refers to a model that has at least one component that has been trained or constructed at least partially for a specific user. Thus, this term encompasses models that have been trained entirely for a specific user, models that are initialized using multi-user data and tuned to the specific user, and models that have both generic components trained for multiple users and one or more components trained or tuned for the specific user. Likewise, the term "application-specific model" refers to a model that has at least one component that has been trained or constructed at least partially for a specific application.

The term "pruning" refers to removing parts of a machine learning model while retaining other parts of the machine learning model. For instance, a large machine learning model can be pruned to a smaller machine learning model for a specific task by retaining weights and/or nodes that significantly contribute to the ability of that model to perform a specific task, while removing other weights or nodes that do not significantly contribute to the ability of that model to perform that specific task. A large machine learning model can be distilled into a smaller machine learning model for a specific task by training the smaller machine learning model to approximate the output distribution of the large machine learning model for a task-specific dataset.

### EXAMPLE DECODER-BASED LANGUAGE MODEL

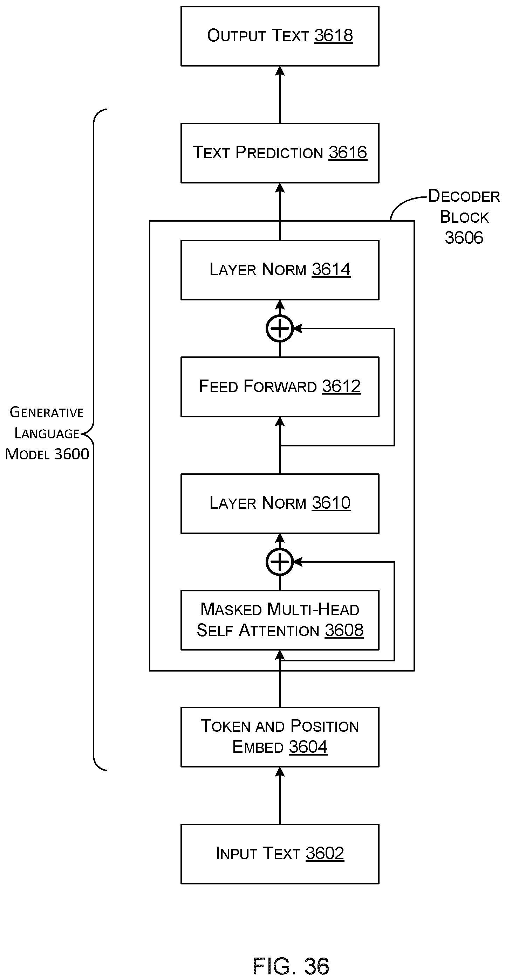

FIG. 36 illustrates an example general artificial intelligence model, such as generative language model 3600 that can be employed using the disclosed implementations. Generative language model 3600 is an example of a machine learning model that can be used to perform one or more natural language processing tasks that involve generating text, as discussed more below. For the purposes of this document, the term "natural language" means language that is normally used by human beings for writing or conversation.

Generative language model 3600 can receive input text 3602, e.g., a prompt from the user. For instance, the input text can include words, sentences, phrases, or other representations of language. The input text can be broken into tokens and mapped to token and position embeddings 3604 representing the input text. Token embeddings can be represented in a vector space where semantically similar and/or syntactically-similar embeddings are relatively close to one another, and less semantically-similar or less syntactically-similar tokens are relatively further apart. Position embeddings represent the location of each token in order relative to the other tokens from the input text.

The token and position embeddings 3604 are processed in one or more decoder blocks 3606. Each decoder block implements masked multi-head self-attention 3608, which is a mechanism relating different positions of tokens within the input text to compute the similarities between those tokens. Each token embedding is represented as a weighted sum of other tokens in the input text. Attention is only applied for already-decoded values, and future values are masked. Layer normalization 3610 normalizes features to mean values of 0 and variance to 1, resulting in smooth gradients. Feed forward layer 3612 transforms these features into a representation suitable for the next iteration of decoding, after which another layer normalization 3614 is applied. Multiple instances of decoder blocks can operate sequentially on input text, with each subsequent decoder block operating on the output of a preceding decoder block. After the final decoding block, text prediction layer 3616 can predict the next word in the sequence, which is output as output text 3618 in response to the input text 3602 and also fed back into the language model. The output text can be a newly generated response to the prompt provided as input text to the generative language model.

### ADDITIONAL EXAMPLES

Various examples are described above. Additional examples are described below. One example includes a device-implemented method comprising providing a schema that includes a declarative and machine-readable data format, based on the schema, iteratively generating suggested code to populate a specification that provides a narrative framework of a long-form text, wherein the specification includes structure and substance to be included in the long-form text, updating the specification according to approved code selected from the suggested code, serializing the specification to generate a plurality of unit specifications, and generating and presenting the long-form text based on the plurality of unit specifications.

Another example can include any of the above and/or below examples where updating the specification further includes iteratively receiving user feedback.

Another example can include any of the above and/or below examples where serializing the specification further comprises generating at least one of the plurality of unit specification based on a previously generated unit specification.

Another example can include any of the above and/or below examples where the unit specifications are used to output the long-form text.

Another example can include any of the above and/or below examples where generating the suggested code further includes generating conversational-style code that is understandable to a human user.

Another example can include any of the above and/or below examples where generating the suggested code further includes outputting high level text that is used to plan the specification and is unrecited in the long-form text.

Another example can include any of the above and/or below examples where the method further comprises reusing at least a portion of the specification when subsequently generating another long-form text.

Another example can include any of the above and/or below examples where generating the suggested code further includes suggesting at least one of a character, relationship, or plot point based on an update to a previously accepted suggestion.

Another example can include any of the above and/or below examples where the method further comprises automatically checking the specification for a gap in continuity

Another example can include any of the above and/or below examples where generating the suggested code further includes automatically generating the suggested code in response to rejection of a previous suggestion.

Another example can include any of the above and/or below examples where updating the specification includes receiving an initial and an ending state for at least one of a character, a relationship, or a storyline of the specification.

Another example can include any of the above and/or below examples where generating the suggested code further includes outputting a plurality of proposals for user selection.

Another example includes a device-implemented method comprising generating a first suggestion for populating a first portion of a specification, wherein the specification includes structure and substance to be included in a long-form text, receiving first user feedback updating the first suggestion, updating the specification according to the first suggestion, using the first portion to generate a second suggestion for populating a second portion of the specification, updating the second portion of the specification according to second user feedback, using the first and second portions of the specification to generate a third suggestion for populating a third portion of the specification, where there is continuity of the structure and the substance between the third suggestion and the first and second portions of the specification, and outputting the long-form text based on the first, second, and third portions.

Another example can include any of the above and/or below examples where the method further comprises automatically checking the first and second portions of the specification for a gap in the continuity.

Another example can include any of the above and/or below examples where outputting the long-form text further includes using a large language model (LLM) to model the first, second, and third portions of the specification.

Another example can include any of the above and/or below examples where the method further comprises generating conversational-style code that corresponds to the first suggestion.

Another example includes a system comprising a storage to store a specification agent to generate a schema that includes a declarative and machine-readable data format to be used to generate long-form text, based on the schema, to iteratively generate suggested code to populate a specification that includes structure and substance to be included in the long-form text, and to update the specification according to approved code selected from the suggested code, a serializer to serialize the specification to generate a plurality of unit specifications, and a generation agent to use the plurality of unit specifications to generate and output the long-form text.

Another example can include any of the above and/or below examples where the specification agent reuses at least a portion of the specification when subsequently generating another long-form text.

Another example can include any of the above and/or below examples where the specification agent automatically checks the specification for a gap in continuity.

Another example can include any of the above and/or below examples where the generation of a first unit specification of the plurality of unit specifications is based on a second unit specification of the plurality of unit specifications.

### CONCLUSION

The description relates to computer-assisted generation of long-form text by creating a schema that includes a declarative and machine-readable data format. Based on the schema, processes iteratively generate suggested code to populate a specification that provides the narrative framework for the long-form text. The specification includes structure and substance for inclusion in the long-form text. The interactive nature of the specification development allows a user to progressively update and confirm automatically generated suggestions. In this manner, the specification is updated according to approved code selected from the iteratively generated code. Additional processes serialize the specification to generate multiple unit specifications. A large language model (LLM) is used to generate the long-form text based on the unit specifications.

The description includes long-form narrative text generation concepts. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and other features and acts that would be recognized by one skilled in the art are intended to be within the scope of the claims.

## Claims

1. A system (3500), comprising:
a specification agent (103) to generate a schema (105) that includes a declarative and machine-readable data format to be used to generate long-form text (101), based on the schema, to iteratively generate suggested code (308) to populate a specification (106) that includes structure and substance to be included in the long-form text, and to update the specification according to approved code (506) selected from the suggested code;
a serializer (120) to serialize the specification to generate a plurality of unit specifications (130); and
a generation agent (104) to use the plurality of unit specifications to generate and output the long-form text.

2. The system of claim 1, wherein the specification agent reuses at least a portion of the specification when subsequently generating another long-form text.

3. The system of claim 1 or claim 2, wherein the specification agent automatically checks the specification for a gap in continuity.

4. The system of any preceding claim, wherein the generation of a first unit specification of the plurality of unit specifications is based on a second unit specification of the plurality of unit specifications.

5. A device-implemented method comprising:
providing a schema (105) that includes a declarative and machine-readable data format;
based on the schema, iteratively generating suggested code (308) to populate a specification (106) that provides a narrative framework of a long-form text (101), wherein the specification includes structure and substance to be included in the long-form text;
updating the specification according to approved code (506) selected from the suggested code;
serializing the specification to generate a plurality of unit specifications (130); and,
generating and presenting the long-form text based on the plurality of unit specifications.

6. The method of claim 5, wherein updating the specification further includes iteratively receiving user feedback.

7. The method of claim 5 or claim 6, wherein serializing the specification further comprises generating at least one of the plurality of unit specification based on a previously generated unit specification.

8. The method of any of claims 5 to 7, wherein the unit specifications are used to output the long-form text.

9. The method of any of claims 5 to 8, wherein generating the suggested code further includes generating conversational-style code that is understandable to a human user.

10. The method of any of claims 5 to 9, wherein generating the suggested code further includes outputting high level text that is used to plan the specification and is unrecited in the long-form text.

11. The method of any of claims 5 to 10, further comprising reusing at least a portion of the specification when subsequently generating another long-form text.

12. The method of any of claims 5 to 11, wherein generating the suggested code further includes suggesting at least one of a character, relationship, or plot point based on an update to a previously accepted suggestion.

13. The method of any of claims 5 to 12, further comprising automatically checking the specification for a gap in continuity.

14. The method of any of claims 5 to 13, wherein generating the suggested code further includes automatically generating the suggested code in response to rejection of a previous suggestion.

15. The method of any of claims 5 to 14, wherein updating the specification includes receiving an initial and an ending state for at least one of a character, a relationship, or a storyline of the specification.
